# EUROPEAN PATENT SPECIFICATION

(11) **EP 3 676 189 B1**
(45) Date of publication and mention of the grant of the patent: **26.11.2025**
(21) Application number: 18762062.0
(22) Date of filing: 27.08.2018
(51) Int. Cl.: B65D 5/74, B65D 5/02, B65D 5/06

(54) **SHEETLIKE COMPOSITE, ESPECIALLY FOR PRODUCTION OF DIMENSIONALLY STABLE FOOD AND DRINK PRODUCT CONTAINERS, HAVING A ROOF AREA FORMED BY A MULTITUDE OF GROOVE LINES HAVING PARTLY CONVEX CURVATURE**
FLÄCHIGER VERBUNDWERKSTOFF, INSBESONDERE ZUR HERSTELLUNG FORMSTABILER LEBENSMITTEL- UND GETRÄNKEBEHÄLTER, MIT EINEM DURCH EINE VIELZAHL VON RILLENLINIEN MIT TEILWEISE KONVEXER KRÜMMUNG GEBILDETEN DACHBEREICH
COMPOSITE EN FORME DE FEUILLE, EN PARTICULIER POUR LA PRODUCTION DE RÉCIPIENTS DE PRODUITS ALIMENTAIRES ET DE BOISSONS DE DIMENSIONS STABLES, AYANT UNE ZONE DE TOIT FORMÉE D'UNE MULTITUDE DE LIGNES DE RAINURE AYANT UNE COURBURE PARTIELLEMENT CONVEXE

(30) Priority: 29.08.2017 DE 102017215078
(43) Date of publication of application: 08.07.2020
(73) Proprietor: SIG Services AG, 8212 Neuhausen am Rheinfall (CH)
(72) Inventor: WIRTZ, Christoph, 52441 Linnich (DE); HÖTEL, Melanie, 41812 Erkelenz (DE)
(74) Representative: Herzog IP Patentanwalts GmbH
(86) International application number: PCT/EP2018/073032
(87) International publication number: WO 2019/042942

(56) References cited:
- EP-A1- 1 627 819
- EP-A1- 2 287 082
- EP-A1- 3 228 552
- WO-A1-2007/114752
- WO-A1-2010/070121
- WO-A1-2017/174304
- WO-A2-2005/097606
- WO-A2-2009/030910
- JP-A- 2008 063 011
- ANONYMOUS: "Portion package for pourable food products", RESEARCH DISCLOSURE, KENNETH MASON PUBLICATIONS, HAMPSHIRE, UK, GB, vol. 414, no. 41, 1 October 1998 (1998-10-01), XP007123399, ISSN: 0374-4353

## Description

The present invention relates to a sheetlike composite as defined in claim 1, methods of manufacturing a sheetlike composite as defined in claims 5 and 6, a sheetlike composite obtainable by said methods, a method of manufacturing a container precursor as defined in claim 10 and a container precursor obtainable by said method, a method of manufacturing a filled and closed container as defined in claim 12 and a closed container obtainable by said method and the use of the sheetlike composite or of the precursor for the production of a food or drink product container as defined in claim 14.

For some time, food and drink products, whether they be food and drink products for human consumption or else animal feed products, have been preserved by storing them either in a can or in a jar closed by a lid. In this case, the shelf life can be increased firstly by sterilizing the food or drink product and the container, here the jar or can, separately and to the greatest possible extent in each case, and then introducing the food or drink product into the container and closing the container. However, these measures for increasing the shelf life of food and drink products, which have been tried and tested over a long period, have a series of disadvantages, for example the need for another sterilization later on. Cans and jars, because of their essentially cylindrical shape, have the disadvantage that very dense and space-saving storage is not possible. Moreover, cans and jars have considerable intrinsic weight, which leads to increased energy expenditure in transport. In addition, production of glass, tinplate or aluminium, even when the raw materials used for this purpose are recycled, necessitates quite a high expenditure of energy. In the case of jars, an additional aggravating factor is elevated expenditure on transport. The jars are usually prefabricated in a glass factory and then have to be transported to the facility where the food and drink products are dispensed with the use of considerable transport volumes. Furthermore, jars and cans can be opened only with considerable expenditure of force or with the aid of tools and hence in a rather laborious manner. In the case of cans, there is a high risk of injury arising from sharp edges that occur on opening. In the case of jars, there are recurrent instances of broken glass getting into the food or drink product in the course of filling or opening of the filled jars, which in the worst case can lead to internal injuries when the food or drink product is consumed. In addition, both cans and jars have to be labelled for identification and promotion of the food or drink product contents. The jars and cans cannot readily be printed directly with information and promotional messages. In addition to the actual print, a substrate for the print, a paper or a suitable film, is thus needed, as is a securing means, an adhesive or a sealant.

Other packaging systems for storing food and drink products over a long period with minimum impairment are known from the prior art. These are containers produced from sheetlike composites - frequently also referred to as laminates. Sheetlike composites of this kind are frequently constructed from a thermoplastic polymer layer, a carrier layer usually consisting of cardboard or paper which imparts dimensional stability to the container, an adhesion promoter layer, a barrier layer and a further polymer layer, as disclosed inter alia in WO 90/09926 A2. Since the carrier layer imparts dimensional stability to the container manufactured from the laminate, these containers, by contrast with film bags, are to be regarded as a further development of the aforementioned jars and cans.

At the same time, these laminate containers already have many advantages over the conventional jars and cans. Nevertheless, there are opportunities for improvement in the case of these packaging systems too. For instance, these laminate containers as such are often comparatively cumbersome to open. In order to counter this problem, prior art laminate containers are provided with an opening aid. These are frequently applied by bonding in the region of an intended fracture site of the laminate, frequently in the form of a hole provided in the carrier layer. In some advantageous configurations of the laminate container, the problem occurs that the area of the container having the hole bends or corrugates, i.e. is not completely flat. This brings disadvantages for the applying of the opening aid. For instance, what can occur in the production process is that the opening aid is not bonded sufficiently firmly to the container. For instance, the opening aid can become detached in the course of transport or storage of the container, which causes the problem of cumbersome opening of the container. What can also occur in the production process is that the opening aid is not bonded to the container with a tight seal. After the container is opened, this results in a leak between the laminate and the opening aid applied. This can result in uncontrolled lateral outflow when pouring the contents of the container out. Thus, efficient and clean pouring is not possible. In order to avoid these problems as far as possible, it would be necessary to use more adhesive in the above-described incompletely flat container areas in order to bond the opening aid to the container. It is easy to see that this is undesirable since elevated consumption of starting material increases manufacturing costs. Moreover, the use of too much adhesive can lead to flowing over of the adhesive. The overflowing adhesive can run onto the hole covered by the barrier layer and often also by polymer layers in the carrier layer and lead, after curing, to disadvantageous impairment of the opening characteristics. For example, what can occur is that the hole-covering layers are not cleanly severed and hence no clean pouring orifice is obtained.

Further, WO 2009/030910 A2 the prior art teaches a method of producing a packaging carton and a packaging blank, a packaging carton sleeve and a packaging carton. WO 2005/097606 A2 discloses a packaging container a method of use of the container. WO 2010/070121 A1 refers to a packaging carton of semi-rigid packaging material. EP 2 287 082 A1 teaches a multilayer sheet packaging material for producing sealed packages of pourable food products and EP 1 627 819 A1 discloses an opening device for a sealed package containing a pourable food product.

In general terms, it is an object of the present invention to at least partly overcome a disadvantage that arises from the prior art. It is a further object of the invention to provide a laminate from which it is possible by means of folding along grooves, sealing and applying an opening aid to provide a dimensionally stable food or drink product container which has very good openability and allows very clean pouring of the food or drink product after opening. Moreover, the sufficiently firm attachment of the opening aid here preferably requires the use of a minimum amount of adhesive or sealant. Preferably, the food or drink product container here can assume an as great as possible multitude of different shapes. Preferably, the food or drink product container has a shape of very good grippability. The shape with good grippability is preferably achieved by rounded longitudinal edges of the food or drink product container. Additionally or alternatively, the food or drink product container preferably has a roof which is slanted relative to its base area. In this context, the invention preferably enables a maximum inclination of the roof relative to the base area coupled with minimal adverse effect on opening and pouring characteristics of the container or on the adhesion of an opening aid to the container or both. It is a further object of the invention to provide the aforementioned advantageous laminate, wherein the very good opening of the food or drink product container gives a pouring hole of maximum size with constant container size. It is a further object of the invention to provide a laminate from which it is possible by means of folding along grooves and sealing to provide a dimensionally stable food or drink product container which, after opening, can be disposed of in a very space-saving manner. It is a further object of the invention to provide the aforementioned dimensionally stable food or drink product container.

A contribution to the at least partial achievement of at least one, preferably more than one, of the above objects is made by the independent claims 1, 5-7 and 10-14. . The dependent claims provide preferred embodiments which contribute to the at least partial achievement of at least one of the objects.

The numbering of the following embodiments does not necessarily correspond to the appended claims which define the scope of the invention.

A contribution to the achievement of at least one of the objects of the invention is made by an embodiment 1 of a sheetlike composite 1 comprising, as mutually superposed layers of a layer sequence in a direction from an outer face of the sheetlike composite to an inner face of the sheetlike composite,
a) a carrier layer,
b) a barrier layer, and
c) an inner polymer layer,
wherein the inner polymer layer includes a polyethylene or a polypropylene or a mixture of the two, wherein the sheetlike composite has a multitude of groove lines arranged and configured such that, by folding the sheetlike composite along the groove lines and joining seam areas of the sheetlike composite thereby obtaining seams, a closed container is obtainable, wherein the closed container has a roof area, wherein a first portion of the groove lines of the multitude of groove lines at least partly forms a circumference of a first part-area of the roof area, wherein the groove lines of the first portion, relative to the first part-area of the roof area, have at least partly convex curvature, wherein the first part-area of the roof area has a first length in a longitudinal direction and has a second length in a circumferential direction at right angles to the longitudinal direction, wherein a ratio of the first length to the second length is in a range from 0.3 to 1.2, wherein the sheetlike composite has at least one further part-area of the roof area, wherein the first part-area of the roof area and the at least one further part-area of the roof area are arranged and formed such that they together form the roof area of the closed container in the closed container, wherein the at least one further part-area of the roof area has a third length in the longitudinal direction, wherein a ratio of the first length to the third length is in a range from 1.0 to 3.0, wherein the carrier layer has a hole in the first part-area of the roof area, wherein the first part-area of the roof area has a first surface area, wherein the hole has a further surface area, where a ratio of the first surface area to the further surface area is in a range from 1.5 to 35.0. Preferably, the ratio of the first length to the second length is in a range from 0.4 to 1.0, more preferably from 0.5 to 0.9, more preferably from 0.6 to 0.9, most preferably from 0.6 to 0.8.

In one embodiment 2 of the invention, the sheetlike composite 1 is configured according to embodiment 1, wherein the sheetlike composite is a blank for production of a single closed container.

In one embodiment 3 of the invention, the sheetlike composite 1 is configured according to embodiment 1 or 2, wherein the hole is covered at least by the barrier layer and the inner polymer layer as hole-covering layers. Preferably, the hole is additionally covered by the outer polymer layer or the polymer interlayer or by both. Layers covering the hole are referred to herein as hole-covering layers. If at least 2 hole-covering layers are present, the hole-covering layers in the hole preferably form a layer sequence of layers joined to one another in the hole.

In one embodiment 4 of the invention, the sheetlike composite 1 is configured according to any of its embodiments 1 to 3, wherein the ratio of the first surface area to the further surface area is in a range from 2.0 to 35.0, most preferably from 3.0 to 35.0. In a further preferred embodiment, the ratio of the first surface area to the further surface area is in a range from 1.5 to 15.0, preferably from 1.5 to 10.0, more preferably from 1.5 to 8.0, more preferably from 2.0 to 7.0, more preferably from 3.0 to 6.0, most preferably from 3.5 to 5.5. Disclosed is also a ratio of the first surface area to the further surface area from 15.0 to 45.0, preferably from 17.0 to 43.0, more preferably from 19.0 to 40.0, more preferably from 20.0 to 38.0, most preferably from 22.0 to 36.0. In connection with the present figures for the first and further surface areas, the first surface area preferably includes the further surface area, meaning that the surface area of the hole is included and not subtracted in the determination of the surface area of the first part-area of the roof area.

In one embodiment 5 of the invention, the sheetlike composite 1 is configured according to any of the preceding embodiments, wherein the third length is shorter than the first length. Preferably, the third length is shorter than the first length by at least 5 mm, more preferably by at least 8 mm, most preferably by at least 10 mm. In this case, a difference between the first length and the third length preferably affects an inclination of the roof area in the container to be produced from the sheetlike composite.

In one embodiment 6 of the invention, the sheetlike composite 1 is configured according to any of the preceding embodiments, wherein the ratio of the first length to the third length is in a range from 1.1 to 2.8, preferably from 1.2 to 2.7, more preferably from 1.3 to 2.6, more preferably from 1.3 to 2.5, most preferably from 1.4 to 2.4. The greater the ratio of the first length to the third length, preferably, the greater an inclination of the roof area in the container to be produced from the sheetlike composite.

In one embodiment 7 of the invention, the sheetlike composite 1 is configured according to any of the preceding embodiments, wherein the groove lines of the multitude of groove lines at least partly include linear depressions on the outer face of the sheetlike composite. A preferred linear depression is a linear displacement of material. Preferably, the groove lines of the multitude of groove lines take the form of linear depressions on the outer face of the sheetlike composite. Further preferably, the groove lines of the multitude of groove lines have bulges on the inner face of the sheetlike composite.

In one embodiment 8 of the invention, the sheetlike composite 1 is configured according to any of the preceding embodiments, wherein the first part-area of the roof area is arranged in the circumferential direction between two groups each of at least three, preferably at least four, triangular areas at least partly bounded by groove lines of the multitude of groove lines. Preferably, in each case three, more preferably four, triangular areas at least partly bounded by groove lines of the multitude of groove lines are arranged between the first part-area of the roof area and a first further part-area of the roof area, and between the first part-area of the roof area and a second further part-area of the roof area.

In one embodiment 9 of the invention, the sheetlike composite 1 is configured according to any of the preceding embodiments, wherein the sheetlike composite additionally includes an outer polymer layer, wherein the outer polymer layer superimposes the carrier layer on a side of the carrier layer remote from the barrier layer. In a preferred embodiment, the outer polymer layer adjoins the carrier layer. The outer polymer layer, preferably, includes a polyethylene or a polypropylene or both, to an extent of at least 50% by weight, more preferably to an extent of at least 60% by weight, even more preferably to an extent of at least 70% by weight, still more preferably to an extent of at least 80% by weight, most preferably to an extent of at least 90% by weight, based in each case on the weight of the outer polymer layer.

In one embodiment 10 of the invention, the sheetlike composite 1 is configured according to embodiment 9, wherein the outer polymer layer includes an LDPE to an extent of at least 50% by weight, more preferably to an extent of at least 60% by weight, even more preferably to an extent of at least 70% by weight, still more preferably to an extent of at least 80% by weight, most preferably to an extent of at least 90% by weight, based in each case on the weight of the outer polymer layer.

In one embodiment 11 of the invention, the sheetlike composite 1 is configured according to embodiment 9 or 10, wherein the outer polymer layer is superimposed by a colour application, preferably a decoration, on a side of the outer polymer layer remote from the carrier layer or on a side of the outer polymer layer facing the carrier layer. In both the aforementioned arrangements, the colour application preferably adjoins the outer polymer layer. Preferably, the colour application includes at least one colourant, more preferably at least 2, more preferably at least 3, more preferably at least 4, even more preferably at least 5 and most preferably at least 6 colourants. The aforementioned colourants preferably each have different colours.

In one embodiment 12 of the invention, the sheetlike composite 1 is configured according to any of the preceding embodiments, wherein the sheetlike composite includes a polymer interlayer between the carrier layer and the barrier layer.

In one embodiment 13 of the invention, the sheetlike composite 1 is configured according to any of the preceding embodiments, wherein the polymer interlayer or the outer polymer layer or both includes, preferably consists of, a polyethylene or a polypropylene or a mixture of the two. Preferably, the inner polymer layer consists of a polyethylene or a polypropylene or a mixture of the two. Preferably, one selected from the group consisting of the inner polymer layer, the polymer interlayer and the outer polymer layer, or a combination of at least two of these, includes a polyethylene or a polypropylene or a mixture thereof to an extent of at least 50% by weight, preferably to an extent of at least 60% by weight, more preferably to an extent of at least 70% by weight, even more preferably to an extent of at least 80% by weight, most preferably to an extent of at least 90% by weight, based in each case on the weight of the respective layer.

In one embodiment 14 of the invention, the sheetlike composite 1 is configured according to any of the preceding embodiments, wherein the carrier layer includes, preferably consists of, one selected from the group consisting of cardboard, paperboard and paper, or a combination of at least two of these.

In one embodiment 15 of the invention, the sheetlike composite 1 is configured according to any of the preceding embodiments, wherein the barrier layer includes, preferably consists of, one selected from the group consisting of a plastic, a metal and a metal oxide, or a combination of at least two of these.

A contribution to the achievement of at least one of the objects of the invention is made by an embodiment 1 of a method 1 comprising, as method steps:
a) providing a sheetlike composite precursor including a carrier layer, and
b) introducing a multitude of groove lines into the sheetlike composite precursor,
wherein the groove lines of the multitude of groove lines are introduced such that, by folding a sheetlike composite obtained from the sheetlike composite precursor along the groove lines and joining seam areas of the sheetlike composite thereby obtaining seams, a closed container is obtainable, wherein the closed container has a roof area, wherein a first portion of the groove lines of the multitude of groove lines at least partly forms a circumference of a first part-area of the roof area, wherein the groove lines of the first portion, relative to the first part-area of the roof area, have at least partly convex curvature, wherein the first part-area of the roof area has a first length in a longitudinal direction and has a second length in a circumferential direction at right angles to the longitudinal direction, wherein a ratio of the first length to the second length is in a range from 0.3 to 1.2, wherein the sheetlike composite has at least one further part-area of the roof area, wherein the first part-area of the roof area and the at least one further part-area of the roof area are arranged and formed such that they together form the roof area of the closed container in the closed container, wherein the at least one further part-area of the roof area has a third length in the longitudinal direction, wherein a ratio of the first length to the third length is in a range from 1.0 to 3.0, wherein the carrier layer has a hole in the first part-area of the roof area, wherein the first part-area of the roof area has a first surface area, wherein the hole has a further surface area, where a ratio of the first surface area to the further surface area is in a range from 1.5 to 35.0, wherein
I) the method additionally includes as method steps:
   c) superimposing the carrier layer with a barrier layer, and
   d) superimposing the barrier layer on a side of the barrier layer remote from the carrier layer with an inner polymer layer thereby obtaining the sheetlike composite, or
II) the sheetlike composite precursor in the method step a) comprises, in the form of mutually superposed layers of a layer sequence, in a direction from an outer face of the sheetlike composite precursor to an inner face of the sheetlike composite precursor,
   A. the carrier layer,
   B. a barrier layer, and
   C. an inner polymer layer,
   wherein in method step b) the sheetlike composite is obtained,
wherein, in each case, the inner polymer layer includes a polyethylene or a polypropylene or a mixture of the two.

Preferably, the ratio of the first length to the second length is in a range from 0.4 to 1.0, more preferably from 0.5 to 0.9, more preferably from 0.6 to 0.9, most preferably from 0.6 to 0.8. Preferably, the carrier layer is configured and arranged according to any of the embodiments of the sheetlike composite 1 according to the invention. The method 1 is preferably a method of producing a sheetlike composite. A preferred sheetlike composite is designed to producing a food or drink product container.

In one embodiment 2 of the invention, the method 1 is configured according to its embodiment 1, wherein, according to the alternative I), the barrier layer is configured and arranged according to any of the embodiments of the sheetlike composite 1 according to the invention. The superimposing with the barrier layer is preferably effected in the form of a lamination.

In one embodiment 3 of the invention, the method 1 is configured according to its embodiment 1 or 2, wherein, according to the alternative I), between the method steps b) and c), the carrier layer is superimposed with an outer polymer layer on a side of the carrier layer remote from the barrier layer. Preferably, the outer polymer layer is configured and arranged according to any of the embodiments of the sheetlike composite 1 according to the invention. The superimposing with the outer polymer layer is preferably effected by extruding an outer polymer composition from which the outer polymer layer is obtainable.

In one embodiment 4 of the invention, the method 1 is configured according to any of its embodiments 1 to 3, wherein, according to the alternative I), in the method step c), a polymer interlayer is introduced between the carrier layer and the barrier layer. Preferably, the polymer interlayer is configured and arranged according to any of the embodiments of the sheetlike composite 1 according to the invention.

In one embodiment 5 of the invention, the method 1 is configured according to its embodiment 1, wherein, according to the alternative II), the carrier layer, the barrier layer, or the inner polymer layer, or a combination of at least two of the above, is configured and arranged according to any of the embodiments of the sheetlike composite 1 of the invention.

In one embodiment 6 of the invention, the method 1 is configured according to its embodiment 1 or 5, wherein, according to the alternative II), the sheetlike composite precursor in the method step a) additionally comprises an outer polymer layer that superimposes the carrier layer on a side facing the outer face. Preferably, the outer polymer layer is configured and arranged according to any of the embodiments of the sheetlike composite 1 according to the invention.

In one embodiment 7 of the invention, the method 1 is configured according to its embodiment 1, 5 or 6, wherein, according to the alternative II), the sheetlike composite precursor in the method step a) additionally comprises a polymer interlayer between the carrier layer and the barrier layer. Preferably, the polymer interlayer is configured and arranged according to any of the embodiments of the sheetlike composite 1 according to the invention.

In one embodiment 8 of the invention, the method 1 is configured according to any of its embodiments 1 and 5 to 7, wherein, according to the alternative II), the method additionally includes, after the method step a), cutting of the sheetlike composite precursor to size to form a blank for production of a single closed container. Preferably, the aforementioned cutting-to-size follows after the method step b).

In one embodiment 9 of the invention, the method 1 is configured according to any of its embodiments 1 to 8, wherein, in the method step b), the introducing of the groove lines of the multitude of groove lines is effected in the form of an introduction of a multitude of linear depressions on one side of the carrier layer which is remote from the barrier layer in the sheetlike composite. Preferably, the introduction is effected by contacting the sheetlike composite precursor on the side which is remote from the barrier layer in the sheetlike composite, and preferably simultaneously on an opposite side of the sheetlike composite precursor, with at least one grooving tool. A, preferably linear, region of the sheetlike composite precursor is preferably taken up here into a recess in the grooving tool on the aforementioned opposite side. The region is preferably pressed into the recess here. Thus, the linear depressions are preferably obtained in the form of linear material displacements. A preferred grooving tool has a two-part construction. Thus, the grooving tool preferably comprises one part having a recess and a further part designed to press the sheetlike composite precursor into the recess. Accordingly, the two parts are preferably in an interlocking design.

In one embodiment 10 of the invention, the method 1 is configured according to any of its embodiments 6 to 9, wherein, according to the alternative II), the sheetlike composite precursor in the method step a) additionally comprises a colour application that superimposes the outer polymer layer on a side of the outer polymer layer remote from the carrier layer. Preferably, the colour application is configured and arranged according to any of the embodiments of the sheetlike composite 1 according to the invention.

In one embodiment 11 of the invention, the method 1 is configured according to any of its embodiments 1 to 4 and 9, wherein, according to the alternative I), the sheetlike composite precursor additionally includes a colour application that superimposes the carrier layer. Preferably, the colour application is configured and arranged according to any of the embodiments of the sheetlike composite 1 according to the invention. Preferably, the colour application superimposes the carrier layer on a side of the carrier layer remote from the barrier layer.

A contribution to the achievement of at least one of the objects of the invention is made by an embodiment 1 of a sheetlike composite 2 obtainable by the method 1 according to any of its embodiments 1 to 11.

A contribution to the achievement of at least one of the objects of the invention is made by an embodiment 1 of a container precursor 1 comprising the sheetlike composite 1 or 2, in each case according to any of its above embodiments.

In one embodiment 2 of the invention, the container precursor 1 is configured according to its embodiment 1, wherein the sheetlike composite comprises at least two folds, preferably at least 3 folds, more preferably at least 4 folds.

In one embodiment 3 of the invention, the container precursor 1 is configured according to its embodiment 1 or 2, wherein the sheetlike composite comprises a first longitudinal edge and a further longitudinal edge, wherein the first longitudinal edge is joined to the further longitudinal edge thereby forming a longitudinal seam of the container precursor.

In one embodiment 4 of the invention, the container precursor 1 is configured according to its embodiment 3, wherein the sheetlike composite includes two further part-areas of the roof area, wherein the two further part-areas of the roof area are joined to one another by means of the longitudinal seam.

A contribution to the achievement of at least one of the objects of the invention is made by an embodiment 1 of a closed container 1 comprising the sheetlike composite 1 or 2, in each case according to any of its above embodiments. Preferably, the closed container according to the invention is a food or drink product container.

In one embodiment 2 of the invention, the closed container 1 is configured according to its embodiment 1, wherein the first part-area of the roof area and the at least one further part-area of the roof area form the roof area in the closed container.

In one embodiment 3 of the invention, the closed container 1 is configured according to its embodiment 1 or 2, wherein the closed container comprises an opening aid joined to the roof area.

In one embodiment 4 of the invention, the closed container 1 is configured according to any of its embodiments 1 to 3, wherein the first part-area of the roof area and the at least one further part-area of the roof area each adjoin a roof seam area, wherein the first part-area of the roof area and the at least one further part-area of the roof area are joined to one another by means of a roof seam in the closed container, wherein the roof seam areas are joined to one another in the roof seam. Preferably, the roof seam takes the form of a fin seam. The roof seam areas are also referred to here as fins.

In one embodiment 5 of the invention, the closed container 1 is configured according to any of its embodiments 1 to 4, wherein the closed container comprises a food or drink product.

In one embodiment 6 of the invention, the closed container 1 is configured according to any of its embodiments 1 to 5, wherein the sheetlike composite comprises a first longitudinal edge and a further longitudinal edge, wherein the first longitudinal edge is joined to the further longitudinal edge thereby forming a longitudinal seam of the closed container.

In one embodiment 7 of the invention, the closed container 1 is configured according to its embodiment 6, wherein the sheetlike composite includes two further part-areas of the roof area, wherein the two further part-areas of the roof area are joined to one another by means of the longitudinal seam.

A contribution to the achievement of at least one of the objects of the invention is made by an embodiment 1 of a method 2 comprising, as method steps,
a. providing the sheetlike composite 1 or 2, in each case according to any of its above embodiments, the sheetlike composite comprising a first longitudinal edge and a further longitudinal edge;
b. folding the sheetlike composite along groove lines of the multitude of groove lines; and
c. contacting and joining the first longitudinal edge to the further longitudinal edge thereby obtaining a longitudinal seam.

The method 2 is preferably a method of producing a container precursor. A preferred container precursor is a precursor of a food or drink product container. The joining in the method step c. is preferably effected in the form of a sealing, preferably by means of the inner polymer layer or of the outer polymer layer or both, in each case as a sealant.

A contribution to the achievement of at least one of the objects of the invention is made by an embodiment 1 of a container precursor 2, obtainable by the method 2 according to its embodiment 1.

A contribution to the achievement of at least one of the objects of the invention is made by an embodiment 1 of a method 3 comprising, as method steps,
A) providing the container precursor 1 or 2, in each case according to any of its above embodiments;
B) forming a base region of the container precursor by folding the sheetlike composite along groove lines of the multitude of groove lines;
C) closing the base region;
D) filling the container precursor with a food or drink product; and
E) closing the container precursor in a top region thereby obtaining a closed container.

The method 3 is preferably a method of producing a closed container. A preferred closed container is a food or drink product container. The closing in the method step C) preferably comprises sealing, more preferably hot air sealing. The closing in the method step E) preferably comprises sealing, more preferably ultrasound sealing. Alternatively or additionally preferably, the sealing in the method step E) is effected with the inner polymer layer as sealant. Further preferably, in the method step E), the roof seam is formed, preferably by contacting and joining the roof seam area adjoining the first part-area of the roof seam to the roof seam area(s) adjoining the at least one further part-area of the roof seam. Method steps B) to E) are preferably conducted in a filling machine. Prior to the method step D), the container precursor is preferably at least partly sterilized, more preferably in its interior.

In one embodiment 2 of the invention, the method 3 is configured according to its embodiment 1, wherein the closing in method the step C) or E) or in both is effected by joining of seam areas of the sheetlike composite. A preferred joining method is sealing. Preferably, the closed container does not comprise any lid or base, or either, that has not been formed in one piece with the sheetlike composite. Preferably, the method includes, between the method steps A) and B), shaping up the container precursor and preferably further includes placing of the shaped-up container precursor onto a mandrel, preferably of a mandrel wheel. Preferably, the method steps B) to E) are conducted in a filling machine. A preferred filling machine includes a mandrel wheel.

In one embodiment 3 of the invention, the method 3 is configured according to its embodiment 1 or 2, wherein at least part of the sheetlike composite during the folding in the method step B) has a temperature in a range from 10 to 50°C, preferably from 15 to 40°C, more preferably from 16 to 30°C, most preferably from 18 to 25°C.

In one embodiment 4 of the invention, the method 3 is configured according to any of its embodiments 1 to 3, wherein the closing in the method step C) or E) or in both comprises sealing, wherein the sealing is effected by one selected from the group consisting of irradiation, contacting with a hot solid, inducement of mechanical vibration and contacting with a hot gas, or by a combination of at least two of these. In this case, a different sealing method from the aforementioned group may be used in the method step C) from that in the method step E) and vice versa. However, it is also possible to use the same sealing method.

In one embodiment 5 of the invention, the method 3 is configured according to any of its embodiments 1 to 4, wherein the method additionally comprises a method step F), wherein the roof area of the closed container is joined to an opening aid in the method step F). Preferably, the closed container is joined to the opening aid such that the opening aid covers a hole in the carrier layer. A preferred opening aid is a cutting tool, for example a cutting ring. Further preferably, the opening aid may include a lid.

A contribution to the achievement of at least one of the objects of the invention is made by an embodiment 1 of a closed container 2 obtainable by the method 3 according to any of its embodiments 1 to 5.

A contribution to the achievement of at least one of the objects of the invention is made by an embodiment 1 of a use of the sheetlike composite 1 or 2, in each case according to any of its above embodiments, or of the container precursor 1 or 2, in each case according to any of its above embodiments, for production of a food or drink product container. The food or drink product container preferably includes an opening aid joined to the roof area of the sheetlike composite.

Features described as preferred in one category of the invention, for example for the sheetlike composite 1, are likewise preferred in an embodiment of the further categories of the invention.

### Groove lines

A groove line is a linear folding aid in the sheetlike composite. This preferably takes the form of a linear recess, for example of a linear material displacement. "Linear" here preferably means that the recess or material displacement has a length greater than a width of the recess or material displacement by at least a factor of 3, preferably by a factor of 5, more preferably by a factor of 10. In this case, unless stated otherwise, the groove line may be straight or curved, or have straight and curved sections. A curved groove line may have convex or concave curvature or sections of each. The groove line is preferably suitable for forming a fold along the groove line. The groove line here indicates the course of the fold, by means of which an exactly positioned and clean fold can be obtained.

### Longitudinal direction, circumferential direction

Longitudinal direction runs from the base region of the container precursor or closed container to be formed from the sheetlike composite to its top region. In the sheetlike composite, the longitudinal direction is preferably parallel to the longitudinal grooves along which longitudinal folds can be produced, which, preferably but not necessarily, form longitudinal edges in the container precursor or in the closed container. Preferably, the longitudinal direction in the sheetlike composite is a direction which runs along a height of a closed container to be produced from the sheetlike composite. The circumferential direction runs in a composite plane of the sheetlike composite at right angles to the longitudinal direction in the sheetlike composite. Accordingly, the circumferential direction in the container precursor or closed container to be produced from the sheetlike composite runs along the circumference thereof.

### Roof area

The closed container formed from the sheetlike composite is bounded laterally preferably by a shell area, in the downward direction by a base area and in the upward direction by a roof area, if the container is upright. The shell area here preferably connects the base area to the roof area. Thus, the roof area in the sheetlike composite is formed as the sum total of all areas that, in the closed container to be produced from the sheetlike composite, bound this closed container in the upward direction when the closed container is upright. In this context, seam areas of the sheetlike composite preferably do not form part of the roof area since these usually form an additional ply of the sheetlike composite in the closed container. Part-areas of the roof area are preferably those regions of the sheetlike composite at least partly bounded by groove lines that form the roof area of the closed container to be produced from the sheetlike composite, wherein, as described above, seam areas are preferably not regarded as such part-areas. A seam area here is a region of the sheetlike composite which, in order to produce the closed container from the sheetlike composite, is intended for contacting and joining with a further region of the sheetlike composite as a further seam area in order thus to form a seam along which the regions of the sheetlike composite intended to form a wall of the closed container (wall regions) are joined to one another. Such seams are present in the closed container preferably as the longitudinal seam; as seam in the top region that closes it and is also referred to as roof seam herein; and as seam in the base region that closes it. If the two seam areas to be joined for production of the seam are at first folded by what is typically approximately a right angle with respect to the respective adjacent wall region and then the two inner faces of the seam areas are contacted and joined to one another, what is typically formed is a seam that protrudes in the manner of a fin between the two wall regions joined via the seam. Such a seam is also referred to as a fin seam. The fin seam is typically turned over as flat as possible in the closed container and joined to the wall of the container such that it protrudes to a minimum degree. The roof seam is preferably a fin seam. A roof seam area is preferably a seam area intended for formation of a roof seam in the closed container by contacting and joining to a further roof seam area. A roof seam is a seam along which at least two part-areas of the roof seam are joined to one another. The longitudinal seam preferably runs in the longitudinal direction and connects a first longitudinal edge to a further longitudinal edge of the sheetlike composite. Preferably, by folding and joining of the first longitudinal edge to the further longitudinal edge thereby forming the longitudinal seam, a shell-like container precursor is obtainable from the sheetlike composite. The longitudinal seam preferably does not take the form of a fin seam. Instead, along the longitudinal seam, an inner face of a seam area is contacted and joined to an outer face of a further seam area. As a result, the two seam areas lie relatively flat against one another and do not protrude in the manner of a fin.

### Layers of the sheetlike composite

Two layers are joined to one another when their adhesion to one another extends beyond van der Waals attraction forces. Layers that have been joined to one another preferably belong to a category selected from the group consisting of sealed to one another, adhesively bonded to one another and compressed to one another, or a combination of at least two of these. Unless stated otherwise, in a layer sequence, the layers may follow one another indirectly, i.e. with one or at least two intermediate layers, or directly, i.e. with no intermediate layer. This is the case especially in the form of words in which one layer superimposes another layer. A form of words in which a layer sequence comprises enumerated layers means that at least the layers specified are present in the sequence specified. This form of words does not necessarily mean that these layers follow on directly from one another. A form of words in which two layers adjoin one another means that these two layers follow on from one another directly and hence with no intermediate layer. However, this form of words does not specify whether or not the two layers have been joined to one another. Instead, these two layers may be in contact with one another.

### Polymer layers

The term "polymer layer" refers hereinafter especially to the inner polymer layer, the outer polymer layer and the polymer interlayer. A polymer interlayer refers here to a polymer layer between the carrier layer and the barrier layer. A preferred polymer is a polyolefin. The polymer layers may have further constituents. The polymer layers are preferably introduced into or applied to the sheetlike composite material in an extrusion method. The further constituents of the polymer layers are preferably constituents that do not adversely affect the behaviour of the polymer melt on application as a layer. The further constituents may, for example, be inorganic compounds, such as metal salts, or further polymers, such as further thermoplastics. However, it is also conceivable that the further constituents are fillers or pigments, for example carbon black or metal oxides. Suitable thermoplastics for the further constituents especially include those that are readily processible by virtue of good extrusion characteristics. Among these, polymers obtained by chain polymerization are suitable, especially polyesters or polyolefins, particular preference being given to cyclic olefin copolymers (COCs), polycyclic olefin copolymers (POCs), especially polyethylene and polypropylene, and very particular preference to polyethylene. Among the polyethylenes, preference is given to HDPE (*high density polyethylene*)*,* MDPE (*medium density polyethylene*)*,* LDPE (*low density polyethylene*)*,* LLDPE (*linear low density polyethylene*)*,* VLDPE (*very low density polyethylene*) and PE (*polyethylene*)*,* and mixtures of at least two thereof. It is also possible to use mixtures of at least two thermoplastics. Suitable polymer layers have a melt flow rate (MFR) in a range from 1 to 25 g/10 min, preferably in a range from 2 to 20 g/10 min and particularly preferable in a range from 2.5 to 15 g/10 min, and a density in a range from 0.890 g/cm³ to 0.980 g/cm³, preferably in a range from 0.895 g/cm³ to 0.975 g/cm³, and further preferably in a range from 0.900 g/cm³ to 0.970 g/cm³. The polymer layers preferably have at least one melting temperature in a range from 80 to 155°C, preferably in a range from 90 to 145°C and particularly preferable in a range from 95 to 135°C.

### Inner polymer layer

The details which follow for the inner polymer layer apply to the inner polymer layers for all categories of the invention. The inner polymer layer is based on thermoplastic polymers and includes a polyethylene or a polypropylene or a mixture of the two, where the inner polymer layer may include a particulate inorganic solid. However, it is preferable that the inner polymer layer comprises one or more thermoplastic polymers to an extent of at least 70% by weight, preferably at least 80% by weight and more preferably at least 95% by weight, based in each case on the total weight of the inner polymer layer. Preferably, the polymer or polymer mixture of the inner polymer layer has a density (to ISO 1183-1:2004) in a range from 0.900 to 0.980 g/cm³, particularly preferable in a range from 0.900 to 0.960 g/cm³ and most preferably in a range from 0.900 to 0.940 g/cm³. The polymer is preferably a polyolefin, an mPolymer or a combination of the two. The inner polymer layer comprises a polyethylene or a polypropylene or both. In this context, a particularly preferred polyethylene is an LDPE. Preferably, the inner polymer layer includes the polyethylene, polypropylene or both together in a proportion of at least 30% by weight, more preferably at least 40% by weight, most preferably at least 50% by weight, based in each case on the total weight of the inner polymer layer. Additionally or alternatively, the inner polymer layer preferably includes an HDPE, preferably in a proportion of at least 5% by weight, more preferably at least 10% by weight, more preferably at least 15% by weight, most preferably at least 20% by weight, based in each case on the total weight of the inner polymer layer. Additionally or alternatively to one or more of the aforementioned polymers, the inner polymer layer preferably includes a polymer prepared by means of a metallocene catalyst, preferably an mPE. Preferably, the inner polymer layer includes the mPE in a proportion of at least 3% by weight, more preferably at least 5% by weight, based in each case on the total weight of the inner polymer layer. In this case, the inner polymer layer may include 2 or more, preferably 2 or 3, of the aforementioned polymers in a polymer blend, for example at least a portion of the LDPE and the mPE, or at least a portion of the LDPE and the HDPE. In addition, the inner polymer layer may include 2 or more, preferably 3, mutually superposed sublayers which preferably form the inner polymer layer. The sublayers are preferably layers obtained by coextrusion.

In a preferred configuration of the sheetlike composite, the inner polymer layer includes, in a direction from the outer face of the sheetlike composite to the inner face of the sheetlike composite, a first sublayer including an LDPE in a proportion of at least 50% by weight, preferably of at least 60% by weight, more preferably of at least 70% by weight, even more preferably of at least 80% by weight, most preferably of at least 90% by weight, based in each case on the weight of the first sublayer; and a further sublayer including a blend, wherein the blend includes an LDPE in a proportion of at least 30% by weight, preferably of at least 40% by weight, more preferably of at least 50% by weight, even more preferably of at least 60% by weight, most preferably of at least 65% by weight, and an mPE in a proportion of at least 10% by weight, preferably of at least 15% by weight, more preferably of at least 20% by weight, most preferably of at least 25% by weight, based in each case on the weight of the blend. In this case, the further sublayer includes the blend preferably in a proportion of at least 50% by weight, preferably of at least 60% by weight, more preferably of at least 70% by weight, even more preferably of at least 80% by weight, most preferably of at least 90% by weight, based in each case on the weight of the further sublayer. More preferably, the further sublayer consists of the blend.

In a further preferred configuration of the sheetlike composite, the inner polymer layer includes, in a direction from the outer face of the sheetlike composite to the inner face of the sheetlike composite, a first sublayer including an HDPE in a proportion of at least 30% by weight, preferably of at least 40% by weight, more preferably of at least 50% by weight, even more preferably of at least 60% by weight, most preferably of at least 70% by weight, and an LDPE in a proportion of at least 10% by weight, preferably of at least 15% by weight, more preferably of at least 20% by weight, based in each case on the weight of the first sublayer; a second sublayer including an LDPE in a proportion of at least 50% by weight, preferably of at least 60% by weight, more preferably of at least 70% by weight, even more preferably of at least 80% by weight, most preferably of at least 90% by weight, based in each case on the weight of the second sublayer; and a third sublayer including a blend, wherein the blend includes an LDPE in a proportion of at least 30% by weight, preferably of at least 40% by weight, more preferably of at least 50% by weight, even more preferably of at least 60% by weight, most preferably of at least 65% by weight, and an mPE in a proportion of at least 10% by weight, preferably of at least 15% by weight, more preferably of at least 20% by weight, most preferably of at least 25% by weight, based in each case on the weight of the blend. In this case, the third sublayer includes the blend preferably in a proportion of at least 50% by weight, preferably of at least 60% by weight, more preferably of at least 70% by weight, even more preferably of at least 80% by weight, most preferably of at least 90% by weight, based in each case on the weight of the third sublayer. More preferably, the third sublayer consists of the blend.

### Outer polymer layer

The details which follow for the outer polymer layer apply to the outer polymer layers for all categories of the invention. The outer polymer layer preferably comprises a polyethylene or a polypropylene or both. Preferred polyethylenes here are LDPE and HDPE and mixtures of these. A preferred outer polymer layer comprises an LDPE to an extent of at least 50% by weight, preferably to an extent of at least 60% by weight, more preferably to an extent of at least 70% by weight, still more preferably to an extent of at least 80% by weight, most preferably to an extent of at least 90% by weight, based in each case on the weight of the outer polymer layer.

### Polymer interlayer

The details which follow for the polymer interlayer apply to the polymer interlayers for all categories of the invention. The polymer interlayer preferably has a thickness in a range from 10 to 30 µm, more preferably of 12 to 28 µm. The polymer interlayer preferably comprises a polyethylene or a polypropylene or both. In this context, a particularly preferred polyethylene is an LDPE. Preferably, the polymer interlayer includes the polyethylene or the polypropylene or both together in a proportion of at least 20% by weight, more preferably at least 30% by weight, more preferably at least 40% by weight, more preferably at least 50% by weight, more preferably at least 60% by weight, more preferably at least 70% by weight, more preferably at least 80% by weight, most preferably at least 90% by weight, based in each case on the total weight of the polymer interlayer. Additionally or alternatively, the polymer interlayer preferably includes an HDPE, preferably in a proportion of at least 10% by weight, more preferably at least 20% by weight, more preferably at least 30% by weight, more preferably at least 40% by weight, more preferably at least 50% by weight, more preferably at least 60% by weight, more preferably at least 70% by weight, more preferably at least 80% by weight, most preferably at least 90% by weight, based in each case on the total weight of the polymer interlayer. In this context, the polymer interlayer includes the aforementioned polymers preferably in a polymer blend.

### Carrier layer

The carrier layer used may be any material which is suitable for a person skilled in the art for this purpose and which has sufficient strength and stiffness to impart stability to the container to such an extent that the container in the filled state essentially retains its shape. This is, in particular, a necessary feature of the carrier layer since the invention relates to the technical field of dimensionally stable containers. Dimensionally stable containers of this kind should in principle be distinguished from pouches and bags, which are usually produced from thin films. As well as a number of plastics, preference is given to plant-based fibrous materials, especially pulps, preferably limed, bleached and/or unbleached pulps, with paper and cardboard being especially preferred. Accordingly, a preferred carrier layer comprises a multitude of fibres. The basis weight of the carrier layer is preferably in a range from 120 to 450 g/m², especially preferably in a range from 130 to 400 g/m² and most preferably in a range from 150 to 380 g/m². A preferred cardboard generally has a single-layer or multilayer structure and may have been coated on one or both sides with one or else more than one cover layers. In addition, a preferred cardboard has a residual moisture content of less than 20% by weight, preferably of 2% to 15% by weight and especially preferably of 4% to 10% by weight, based on the total weight of the cardboard. An especially preferred cardboard has a multilayer structure. Further preferably, the cardboard has, on the surface facing the environment, at least one lamina, but more preferably at least two laminas, of a cover layer known to the person skilled in the art as a "coating slip". In addition, a preferred cardboard has a Scott bond value (according to Tappi T403um) in a range from 100 to 360 J/m², preferably from 120 to 350 J/m² and especially preferably from 135 to 310 J/m². By virtue of the aforementioned ranges, it is possible to provide a composite from which it is possible to fold a container with high integrity, easily and in low tolerances.

The carrier layer is characterized by a bending resistance which can be measured with a bending tester according to ISO 2493-2:2011 at a bending angle of 15°. The bending tester used is a L&W Bending Tester code 160 from Lorentzen & Wettre, Sweden. The carrier layer preferably has a bending resistance in a first direction in a range from 80 to 550 mN. In the case of a carrier layer that comprises a multitude of fibres, the first direction is preferably a direction of orientation of the fibres. A carrier layer that comprises a multitude of fibres also preferably has a bending resistance in a second direction, perpendicular to the first direction, in a range from 20 to 300 mN. By virtue of the aforementioned bending resistances, the carrier layer especially has sufficient strength and stiffness to give the container stability to such an extent that the container in the filled state essentially retains its shape. The samples used for measuring the bending resistance with the above measuring device have a width of 38 mm and a clamping length of 50 mm. A preferred sheetlike composite with the carrier layer has a bending resistance in the first direction in a range from 100 to 700 mN. Further preferably, the aforementioned sheetlike composite has a bending resistance in the second direction in a range from 50 to 500 mN. The samples of the sheetlike composite used for measuring with the above measuring device also have a width of 38 mm and a clamping length of 50 mm.

### Barrier layer

The barrier layer used may be any material which is suitable for a person skilled in the art for this purpose and which has sufficient barrier action, especially with respect to oxygen. The barrier layer is preferably selected from
a. a polymer barrier layer;
b. a metal layer;
c. a metal oxide layer; or
d. a combination of at least two of a. to c.

If the barrier layer, according to alternative a., is a polymer barrier layer, this preferably comprises at least 70% by weight, especially preferably at least 80% by weight and most preferably at least 95% by weight of at least one polymer which is known to the person skilled in the art for this purpose, especially for aroma or gas barrier properties suitable for packaging containers. Useful polymers, especially thermoplastics, here include N- or O-bearing polymers, either alone or in mixtures of two or more. According to the invention, it may be found to be advantageous when the polymer barrier layer has a melting temperature in a range from more than 155 to 300°C, preferably in a range from 160 to 280°C and especially preferably in a range from 170 to 270°C.

Further preferably, the polymer barrier layer has a basis weight in a range from 2 to 120 g/m², preferably in a range from 3 to 60 g/m², especially preferably in a range from 4 to 40 g/m² and further preferably from 6 to 30 g/m². Further preferably, the polymer barrier layer is obtainable from melts, for example by extrusion, especially laminar extrusion. Further preferably, the polymer barrier layer may also be introduced into the sheetlike composite via lamination. It is preferable in this context that a film is incorporated into the sheetlike composite. In another embodiment, it is also possible to select polymer barrier layers obtainable by deposition from a solution or dispersion of polymers.

Suitable polymers preferably include those having a weight-average molecular weight, determined by gel permeation chromatography (GPC) by means of light scattering, in a range from 3·10³ to 1·10⁷ g/mol, preferably in a range from 5·10³ to 1·10⁶ g/mol and especially preferably in a range from 6·10³ to 1·10⁵ g/mol. Suitable polymers especially include polyamide (PA) or polyethylene vinyl alcohol (EVOH) or a mixture thereof.

Among the polyamides, useful PAs are all of those that seem suitable to the person skilled in the art for the use according to the invention. Particular mention should be made here of PA 6, PA 6.6, PA 6.10, PA 6.12, PA 11 or PA 12 or a mixture of at least two of these, particular preference being given to PA 6 and PA 6.6 and further preference to PA 6. PA 6 is commercially available, for example, under the Akulon^{®}, Durethan^{®} and Ultramid^{®} trade names. Additionally suitable are amorphous polyamides, for example MXD6, Grivory^{®} and Selar^{®} PA. It is further preferable that the PA has a density in a range from 1.01 to 1.40 g/cm³, preferably in a range from 1.05 to 1.30 g/cm³ and especially preferably in a range from 1.08 to 1.25 g/cm³. It is further preferable that the PA has a viscosity number in a range from 130 to 250 ml/g and preferably in a range from 140 to 220 ml/g.

Useful EVOHs include all the EVOHs that seem suitable to the person skilled in the art for the use according to the invention. Examples of these are commercially available, inter alia, under the EVAL^{™} trade names from EVAL Europe NV, Belgium, in a multitude of different versions, for example the EVAL^{™} F104B or EVAL^{™} LR171B types. Preferred EVOHs have at least one, two, more than two or all of the following properties:
- an ethylene content in a range from 20 to 60 mol%, preferably from 25 to 45 mol%;
- a density in a range from 1.0 to 1.4 g/cm³, preferably from 1.1 to 1.3 g/cm³;
- a melting point in a range from more than 155 to 235°C, preferably from 165 to 225°C;
- an MFR value (210°C/2.16 kg when T_{S(EVOH)} < 230°C; 230°C/2.16 kg when 210°C < T_{S(EVOH)} < 230°C) in a range from 1 to 25 g/10 min, preferably from 2 to 20 g/10 min;
- an oxygen permeation rate in a range from 0.05 to 3.2 cm³·20 µm/(m²·day·atm), preferably in a range from 0.1 to 1 cm³·20 µm/(m²·day·atm).

Preferably at least one polymer layer, further preferably the inner polymer layer, or preferably all polymer layers, has/have a melting temperature below the melting temperature of the barrier layer. This is especially true when the barrier layer is formed from polymer. The melting temperatures of the at least one polymer layer, especially the inner polymer layer, and the melting temperature of the barrier layer preferably differ here by at least 1 K, especially preferably by at least 10 K, still more preferably by at least 50 K, even more preferably by at least 100 K. The temperature difference should preferably be chosen to be only of such an amount that there is no melting of the barrier layer, especially no melting of the polymer barrier layer, during the folding.

According to alternative b., the barrier layer is a metal layer. Suitable metal layers are in principle all layers comprising metals which are known to the person skilled in the art and which can provide high light opacity and oxygen impermeability. In a preferred embodiment, the metal layer may take the form of a foil or a deposited layer, for example after a physical gas phase deposition. The metal layer is preferably an uninterrupted layer. In a further preferred embodiment, the metal layer has a thickness in a range from 3 to 20 µm, preferably in a range from 3.5 to 12 µm and especially preferably in a range from 4 to 10 µm.

Metals selected with preference are aluminium, iron or copper. A preferred iron layer may be a steel layer, for example in the form of a foil. Further preferably, the metal layer is a layer comprising aluminium. The aluminium layer may appropriately consist of an aluminium alloy, for example AlFeMn, AlFe1.5Mn, AlFeSi or AlFeSiMn. The purity is typically 97.5% or higher, preferably 98.5% or higher, based in each case on the overall aluminium layer. In a particular configuration, the metal layer consists of an aluminium foil. Suitable aluminium foils have a ductility of more than 1%, preferably of more than 1.3% and especially preferably of more than 1.5%, and a tensile strength of more than 30 N/mm², preferably more than 40 N/mm² and especially preferably more than 50 N/mm². Suitable aluminium foils exhibit in the pipette test a droplet size of more than 3 mm, preferably more than 4 mm and especially preferably of more than 5 mm. Suitable alloys for producing aluminium layers or foils are commercially available under the designations EN AW 1200, EN AW 8079 or EN AW 8111 from Hydro Aluminium Deutschland GmbH or Amcor Flexibles Singen GmbH. In the case of a metal foil as a barrier layer, it is possible to provide an adhesion promoter layer between the metal foil and a closest polymer layer on one and/or both sides of the metal foil.

Further preferably, the barrier layer selected, according to alternative c., may be a metal oxide layer. Useful metal oxide layers include all metal oxide layers that are familiar and seem suitable to the person skilled in the art for achieving a barrier effect with respect to light, vapour and/or gas. Especially preferred are metal oxide layers based on the metals already mentioned above, aluminium, iron or copper, and those metal oxide layers based on titanium oxide or silicon oxide compounds. A metal oxide layer is produced by way of example by vapour deposition of metal oxide on a polymer layer, for example an oriented polypropylene film. A preferred process for this purpose is physical gas phase deposition.

In a further preferred embodiment, the metal layer or metal oxide layer may take the form of a layer composite composed of one or more polymer layers with a metal layer. Such a layer is obtainable, for example, by vapour deposition of metal on a polymer layer, for example an oriented polypropylene film. A preferred process for this purpose is physical gas phase deposition.

### Outer face

The outer face of the sheetlike composite is a surface of a ply of the sheetlike composite which is intended to be in contact with the environment of the container in a container to be produced from the sheetlike composite. This does not oppose, that in individual regions of the container, the outer faces of various regions of the composite are folded onto one another or joined, for example sealed, to one another.

### Inner face

The inner face of the sheetlike composite is a surface of a ply of the sheetlike composite which is intended to be in contact with the contents of the container, preferably a food or drink product, in a container to be produced from the sheetlike composite.

### Adhesion/adhesion promoter layer

An adhesion promoter layer may be present between layers which do not directly adjoin one another, preferably between the barrier layer and the inner polymer layer. This adhesion promoter layer is also referred to herein as first adhesion promoter layer. Useful adhesion promoters in an adhesion promoter layer include all polymers which are suitable for producing a firm join through functionalization by means of suitable functional groups, through the forming of ionic bonds or covalent bonds with a surface of a respective adjacent layer. Preferably, these comprise functionalized polyolefins, especially acrylic acid copolymers, which have been obtained by copolymerization of ethylene with acrylic acids such as acrylic acid, methacrylic acid, crotonic acid, acrylates, acrylate derivatives or carboxylic anhydrides that bear double bonds, for example maleic anhydride, or at least two of these. Among these, preference is given to polyethylene-maleic anhydride graft polymers (EMAH), ethylene-acrylic acid copolymers (EAA) or ethylene-methacrylic acid copolymers (EMAA), which are sold, for example, under the Bynel^{®} and Nucrel^{®}0609HSA trade names by DuPont or the Escor^{®}6000ExCo trade name by ExxonMobil Chemicals.

Further preferably, useful adhesion promoters also include ethylene-alkyl acrylate copolymers. The alkyl group selected is preferably a methyl, ethyl, propyl, i-propyl, butyl, i-butyl or a pentyl group. Further preferably, the adhesion promoter layer may include mixtures of two or more different ethylene-alkyl acrylate copolymers. Likewise preferably, the ethylene-alkyl acrylate copolymer may have two or more different alkyl groups in the acrylate function, for example an ethylene-alkyl acrylate copolymer in which both, methyl acrylate units and ethyl acrylate units, occur in the same copolymer.

According to the invention, it is preferable that the adhesion between a carrier layer, a polymer layer or a barrier layer and the next layer in each case is at least 0.5 N/15 mm, preferably at least 0.7 N/15 mm and especially preferably at least 0.8 N/15 mm. In one configuration according to the invention, it is preferable that the adhesion between a polymer layer and a carrier layer is at least 0.3 N/15 mm, preferably at least 0.5 N/15 mm and especially preferably at least 0.7 N/15 mm. It is further preferable that the adhesion between a barrier layer and a polymer layer is at least 0.8 N/15 mm, preferably at least 1.0 N/15 mm and especially preferably at least 1.4 N/15 mm. If a barrier layer indirectly follows a polymer layer with an adhesion promoter layer in between, it is preferable that the adhesion between the barrier layer and the adhesion promoter layer is at least 1.8 N/15 mm, preferably at least 2.2 N/15 mm and especially preferably at least 2.8 N/15 mm. In a particular configuration, the adhesion between the individual layers is sufficiently strong that a carrier layer is torn apart in an adhesion test, called a cardboard fibre tear in the case of a cardboard as the carrier layer.

### Polyolefin

A preferred polyolefin is a polyethylene (PE) or a polypropylene (PP) or both. A preferred polyethylene is one selected from the group consisting of an LDPE, an LLDPE, and an HDPE, or a combination of at least two of these. A further preferred polyolefin is an mPolyolefin (polyolefin prepared by means of a metallocene catalyst). Suitable polyethylenes have a melt flow rate (MFR = MFI - melt flow index) in a range from 1 to 25 g/10 min, preferably in a range from 2 to 20 g/10 min and especially preferably in a range from 2.5 to 15 g/10 min, and a density in a range from 0.910 g/cm³ to 0.935 g/cm³, preferably in a range from 0.912 g/cm³ to 0.932 g/cm³, and further preferably in a range from 0.915 g/cm³ to 0.930 g/cm³.

### mPolymer

An mPolymer is a polymer which has been prepared by means of a metallocene catalyst. A metallocene is an organometallic compound in which a central metal atom is arranged between two organic ligands, for example cyclopentadienyl ligands. A preferred mPolymer is an mPolyolefin, preferably an mPolyethylene or an mPolypropylene or both. A preferred mPolyethylene is one selected from the group consisting of an mLDPE, an mLLDPE, and an mHDPE, or a combination of at least two of these.

### Melting temperatures

A preferred mPolyolefin is characterized by at least one first melting temperature and a second melting temperature. Preferably, the mPolyolefin is characterized by a third melting temperature in addition to the first and second melting temperature. A preferred first melting temperature is in a range from 84 to 108°C, preferably from 89 to 103°C, more preferably from 94 to 98°C. A preferred further melting temperature is in a range from 100 to 124°C, preferably from 105 to 119°C, more preferably from 110 to 114°C.

### Extrusion

In the extrusion, the polymers are typically heated to temperatures of 210 to 350°C, measured at the molten polymer film beneath the exit from the extruder die. The extrusion can be effected by means of extrusion tools which are known to those skilled in the art and are commercially available, for example extruders, extruder screws, feed blocks, etc. At the end of the extruder, there is preferably an opening through which the polymer melt is pressed. The opening may have any shape that allows extrusion of the polymer melt. For example, the opening may be angular, oval or round. The opening is preferably in the form of a slot of a funnel. Once the melt layer has been applied to the substrate layer by means of the above-described method, the melt layer is left to cool down for the purpose of heat-setting, this cooling preferably being effected by quenching via contact with a surface which is kept at a temperature in a range from 5 to 50°C, especially preferably in a range from 10 to 30°C. Subsequently, at least the flanks are separated from the surface. The separation may be carried out in any way that is familiar and appears suitable to a person skilled in the art for separating the flanks quickly, as precisely and cleanly as possible. Preferably, the separation is effected by means of a knife, laser beam or waterjet, or a combination of two or more thereof, the use of knives being especially preferable, especially a circular knife.

### Lamination

According to the invention, the carrier layer can be superimposed by the barrier layer by lamination. In this case, the prefabricated carrier and barrier layers are joined with the aid of a suitable laminating agent. A preferred laminating agent comprises an intermediate polymer composition from which a polymer interlayer is preferably obtained. In addition, the preferred laminating agent preferably includes a further adhesion promoter composition from which a further adhesion promoter layer is obtained. In this case, the intermediate polymer composition or the further adhesion promoter composition or both are preferably applied by extrusion, more preferably by coextrusion.

### Folding of the sheetlike composite

The sheetlike composite is preferably folded in a temperature range from 10 to 50°C, preferably in a range from 15 to 45°C and especially preferably in a range from 20 to 40°C. This can be achieved in that the sheetlike composite is at a temperature in the aforementioned ranges. It is also preferred that a folding tool, preferably together with the sheetlike composite, is at a temperature in the aforementioned ranges. For this purpose, the folding tool preferably does not have a heating means. Rather, the folding tool or else the sheetlike composite or both may be cooled. It is also preferred that the folding is performed at a temperature of at most 50°C, as "cold folding", and the joining takes place at more than 50°C, preferably more than 80°C and especially preferably more than 120°C, as "hot sealing". The aforementioned conditions, and especially temperatures, preferably also apply in the environment of the folding, for example in the housing of the folding tool.

"Folding" is understood here as meaning, according to the invention, an operation in which an elongated crease, forming an angle, is made in the folded sheetlike composite, preferably by means of a folding edge of a folding tool. For this purpose, often two adjoining faces of a sheetlike composite are bent increasingly towards one another. The folding produces at least two adjoining fold faces that can then be joined at least in sub-regions to form a container region. According to the invention, the joining can be performed by any measure which appears suitable to the person skilled in the art and which allows for a join that is as gas- and liquid-tight as possible. The joining can be performed by sealing or adhesive bonding or a combination of the two measures. In the case of sealing, the join is created by means of a liquid and the solidification thereof. In the case of adhesive bonding, chemical bonds form between the interfaces or surfaces of the two articles to be joined and create the join. It is often advantageous in the case of sealing or adhesive bonding to press together the faces that are to be sealed or adhesively bonded.

### Joining

A useful joining method is any joining method that seems suitable to the person skilled in the art for use of the invention, by means of which a sufficiently firm join can be obtained. A preferred joining method is any selected from the group consisting of sealing, adhesive bonding and pressing, or a combination of at least two of these. In the case of sealing, the join is created by means of a liquid and the solidification thereof. In the case of adhesive bonding, chemical bonds form between the interfaces or surfaces of the two articles to be joined and create the join. It is often advantageous in the case of sealing or adhesive bonding to press together the faces that are to be sealed or adhesively bonded. A preferred method of pressing two layers is compression of a first surface of a first of the two layers onto a second surface of the second of the two layers that faces the first surface over at least 20%, preferably at least 30%, more preferably at least 40%, more preferably at least 50%, more preferably at least 60%, more preferably at least 70%, even more preferably at least 80%, even more preferably at least 90%, most preferably at least 95%, of the first surface. A particularly preferred joining method is sealing. A preferred sealing method comprises, as steps, heating, laying on one another and pressing, the steps preferably being effected in this sequence. Another sequence is likewise conceivable, especially the sequence of laying on one another, heating and pressing. A preferred heating method is heating of a polymer layer, preferably a thermoplastic layer, more preferably a polyethylene layer or a polypropylene layer or both. A further preferred heating method is heating of a polyethylene layer to a temperature in a range from 80 to 140°C, more preferably from 90 to 130°C, most preferably from 100 to 120°C. A further preferred heating method is heating of a polypropylene layer to a temperature in a range from 120 to 200°C, more preferably from 130 to 180°C, most preferably from 140 to 170°C. A further preferred heating method is effected to a sealing temperature of the polymer layer. A preferred heating method can be effected by means of radiation, by means of hot gas, by means of contact with a hot solid, by means of mechanical vibrations, preferably by means of ultrasound, by convection, or by means of a combination of at least two of these measures. A particularly preferred heating method is effected by inducement of an ultrasound vibration.

### Irradiation

In the case of irradiation, any type of radiation suitable to the person skilled in the art for softening of the plastics of the polymer layers present is useful. Preferred types of radiation are IR and UV rays, and microwaves. In the case of the IR rays that are also used for IR welding of sheetlike composites, wavelength ranges of 0.7 to 5 µm should be mentioned. In addition, it is possible to use laser beams in a wavelength range from 0.6 to less than 1.6 µm. In connection with the use of IR rays, these are generated by various suitable sources that are known to the person skilled in the art. Short-wave radiation sources in the range from 1 to 1.6 µm are preferably halogen sources. Medium-wave radiation sources in the range from > 1.6 to 3.5 µm are, for example, metal foil sources. Long-wave radiation sources in the range of> 3.5 µm that are frequently used are quartz sources. Lasers are being used ever more frequently. For instance, diode lasers in a wavelength range from 0.8 to 1 µm, Nd:YAG lasers at about 1 µm and CO₂ lasers at about 10.6 µm are in use. High-frequency technologies with a frequency range from 10 to 45 MHz, frequently in a power range from 0.1 to 100 kW, are also in use.

### Ultrasound

In the case of ultrasound, the following treatment parameters are preferred:

| | |
|---|---|
| P1 | a frequency in a range from 5 to 100 kHz, preferably in a range from 10 to 50 kHz and particularly preferable in a range from 15 to 40 kHz; |
| P2 | an amplitude in a range from 2 to 100 µm, preferably in a range from 5 to 70 µm and particularly preferable in a range from 10 to 50 µm; |
| P3 | an oscillation time (being the period of time within which an oscillation body such as a sonotrode or inductor has a contact oscillation effect on the sheetlike composite) in a range from 50 to 1000 ms, preferably in a range from 100 to 600 ms and particularly preferable in a range from 150 to 300 ms. |

On suitable selection of the radiation and oscillation conditions, it is advantageous to take account of the intrinsic resonances of the plastic and to select frequencies close to these.

### Contact with a solid

Heating via contact with a solid can be effected, for example, by means of a heating plate or heating mould in direct contact with the sheetlike composite, which releases the heat to the sheetlike composite.

### Hot gas

The hot gas, preferably hot air, can be directed onto the sheetlike composite by means of suitable blowers, exit openings or nozzles, or a combination of these. Frequently, contact heating and the hot gas are used simultaneously. For example, a holding device for a tube formed from the sheetlike composite, through which hot gas flows and which is heated as a result and releases the hot gas through suitable openings, can heat the sheetlike composite through contact with the wall of the holding device and the hot gas. Further, the tube can also be heated by fixing the tube with a tube holder and directing the flow from one or two or more hot gas nozzles provided in the tube holder onto the regions of the tube that are to be heated.

### Food or drink product

The present sheetlike composite and the container precursor are preferably designed for production of a food or drink product container. In addition, the closed container according to the invention is preferably a food or drink product container. Food and drink products include all kinds of food and drink known to those skilled in the art for human consumption and also animal feeds. Preferred food and drink products are liquid above 5°C, for example milk products, soups, sauces, non-carbonated drinks.

### Colourant

Useful colourants include both, solid and liquid, colourants that are known to the person skilled in the art and are suitable for the present invention. According to DIN 55943:2001-10, colourant is the collective term for all colouring substances, especially for dyes and pigments. A preferred colourant is a pigment. A preferred pigment is an organic pigment. Pigments that are notable in connection with the invention are especially the pigments mentioned in DIN 55943:2001-10 and those mentioned in "Industrial Organic Pigments, Third Edition" (Willy Herbst, Klaus Hunger Copyright © 2004 WILEY-VCH Verlag GmbH & Co. KGaA, Weinheim ISBN: 3-527-30576-9). A pigment is a colourant that is preferably insoluble in the application medium. A dye is a colourant that is preferably soluble in the application medium.

### Container precursor

A container precursor is a precursor of the closed container which arises in the course of production of a closed container. In this context, the container precursor comprises the sheetlike composite preferably but not necessarily in the form of a blank. In this context, the sheetlike composite may be in an unfolded or folded state. A preferred container precursor has been cut to size and is designed for production of a single closed container. A preferred container precursor which has been cut to size and is designed for production of a single closed container is also referred to as a shell or sleeve. In this context, the shell or sleeve comprises the sheetlike composite in folded form, preferably with at least 2, more preferably with at least 4, longitudinal folds. In addition, the container precursor preferably takes the form of an outer shell of a prism. A preferred prism is a cuboid. Moreover, the shell or sleeve comprises a longitudinal seam and is open in a top region and a base region. A typical container precursor which has been cut to size and is designed for production of a multitude of closed containers is often referred to as a tube.

A further preferred container precursor is open, preferably in a top region or a base region, more preferably in both. A preferred container precursor is in the form of a shell or tube or both. A further preferred container precursor comprises the sheetlike composite in such a way that the sheetlike composite has been folded at least once, preferably at least twice, more preferably at least 3 times, most preferably at least 4 times. A preferred container precursor is in one-piece form. More preferably, a base region of the container precursor is in a one-piece design with a lateral region of the container precursor.

### Container

The closed container according to the invention may have a multitude of different forms, but preference is given to an essentially cuboidal structure. In a departure from a geometric cuboid, however, the container according to the invention here has at least one base which has rounded edges by virtue of the groove lines having at least partly convex curvature in accordance with the invention. In respect of the closed container, this preferably results in at least one rounded longitudinal edge, preferably at least 2 rounded longitudinal edges. These rounded longitudinal edges do not take the form of sharp fold lines, but rather of curves in the sheetlike composite without folding of the sheetlike composite. Accordingly, the curves have a radius of curvature large enough for the sheetlike composite not to be folded along the corresponding rounded longitudinal edge. In addition, the full area of the container may be formed from the sheetlike composite, or it may have a two-part or multipart construction. In the case of a multipart construction, it is conceivable that, as well as the sheetlike composite, other materials are also used, for example plastic, which can be used especially in the top or base regions of the container. In this context, however, it is preferable that the container is formed from the sheetlike composite to an extent of at least 50%, especially preferably to an extent of at least 70% and further preferably to an extent of at least 90% of the area. In addition, the container may have a device for emptying the contents. This may be formed, for example, from a polymer or mixture of polymers and be attached on the outer face of the container. It is also conceivable that this device has been integrated into the container by *"direct injection moulding".* In a preferred configuration, the container according to the invention has at least one edge, preferably from 4 to 22 or else more edges, especially preferably from 7 to 12 edges. Edges in the context of the present invention are understood to mean regions which arise in the folding or bending of a surface. Examples of edges include the longitudinal contact regions between two wall surfaces of the container in each case, also referred to as longitudinal edges herein. In the container, the container walls are preferably the surfaces of the container framed by the edges. Preferably, the closed container according to the invention at least partly, preferably completely, surrounds an interior. Preferably, the interior of the closed container according to the invention comprises a food or drink product. Preferably, the closed container does not comprise any lid or base, or either, that has not been formed in one piece with the sheetlike composite. A preferred closed container comprises a food or drink product.

### Hole

The at least one hole that is provided in the carrier layer according to preferred embodiments may have any shape that is known to a person skilled in the art and suitable for various closures or drinking straws. The holes often have rounded portions in plan view. Thus, the holes may be essentially circular, oval, elliptical or drop-shaped. The shape of the at least one hole in the carrier layer usually also predetermines the shape of the opening that is produced either by an openable closure which is joined to the container and through which the content of the container is dispensed from the container after opening, or by a drinking straw in the container. Consequently, the openings of the opened container often have shapes that are comparable to or even the same as the at least one hole in the carrier layer. Configurations of the sheetlike composite with a single hole primarily serve for letting out the food or drink product located in the container that is produced from the sheetlike composite. A further hole may be provided, especially for letting air into the container while the food or drink product is being let out.

In the context of covering the at least one hole of the carrier layer, it is preferred that the hole-covering layers are at least partly joined to one another, preferably to an extent of at least 30%, preferably at least 70% and especially preferably at least 90%, of the area formed by the at least one hole. It is also preferred that the hole-covering layers are joined to one another at the edges of the at least one hole and preferably lie against the edges in a joined manner, in order in this way to achieve an improved leak-tightness over a join that extends across the entire area of the hole. The hole-covering layers are often joined to one another over the region that is formed by the at least one hole in the carrier layer. This leads to a good leak-tightness of the container formed from the composite, and consequently to a desired long shelf life of the food or drink products kept in the container.

### Opening/opening aid

The opening of the container is usually brought about by at least partially destroying the hole-covering layers that cover the at least one hole. This destruction can be effected by cutting, pressing into the container or pulling out of the container. The destruction can be effected by means of an opening aid which is joined to the container and is arranged in the region of the at least one hole, usually above the at least one hole, for example also by a drinking straw which is pushed through the hole-covering layers. It is also preferred in a configuration according to the invention that an opening aid is provided in the region of the at least one hole. It is preferred here that the opening aid is provided on the surface area of the composite that represents the outer face of the container. The container also preferably comprises a closure, for example a lid, on the outer face of the container. It is in this case preferred that the closure covers the hole at least partially, preferably completely. Consequently, the closure protects the hole-covering layers, which are less robust in comparison with the regions outside the at least one hole, from damaging mechanical effects. For opening the hole-covering layers that cover the at least one hole, the closure often comprises the opening aid. Suitable as such an opening aid are for example hooks for tearing out at least part of the hole-covering layers, edges or cutting edges for cutting into the hole-covering layers or spikes for puncturing the hole-covering layers, or a combination of at least two of these. These opening aids are often mechanically coupled to a screw lid or a cap of the closure, for example by way of a hinge, so that the opening aids act on the hole-covering layers to open the closed container when the screw lid or the cap is actuated. Closure systems of this kind, comprising composite layers covering a hole, openable closures that cover this hole and have opening aids, are sometimes referred to in the specialist literature as "overcoated holes" with "applied fitments". A preferred opening aid comprises one selected from the group consisting of a cutting tool, a piercing tool and a tear-off closure, which preferably includes a linear intended fracture site and a tear-off tab, or a combination of at least two of these.

### TEST METHODS

The following test methods were used within the context of the invention. Unless stated otherwise, the measurements were conducted at an ambient temperature of 23°C, an ambient air pressure of 100 kPa (0.986 atm) and a relative air humidity of 50%.

### MFR

MFR is measured according to standard ISO 1133 (unless stated otherwise at 190°C and 2.16 kg).

### Density

Density is measured according to standard ISO 1183-1.

### Melting temperature

Melting temperature is determined on the basis of the DSC method ISO 11357-1, -5. The instrument is calibrated according to the manufacturer's instructions on the basis of the following measurements:
- temperature of indium - onset temperature,
- heat of fusion of indium,
- temperature of zinc - onset temperature.

### Oxygen permeation rate

Oxygen permeation rate is determined according to standard ASTM D3985-05 (2010). The sample to be examined, unless stated otherwise, is taken from an ungrooved and unfolded region of the laminate. In addition, the sample to be examined is tested with the side facing outward in the laminate facing the test gas. The area of the sample is 50 cm². The measurements are conducted at an ambient temperature of 23°C, an ambient air pressure of 100 kPa (0.986 atm) and a relative air humidity of 50%. The test instrument is an Ox-Tran 2/22 from Mocon, Neuwied, Germany. The measurement is conducted without compressed air compensation. For the measurements, samples at ambient temperature are used. Further settings and factors that affect the measurement - especially the others listed under point 16 of the standard ASTM D3985-05 (2010) - are defined by the instrument used and the proper use and maintenance thereof according to the manufacturer's handbook.

### Layer thickness

The layer thickness of a specimen having an area of 0.5 cm² was determined by means of a scanning electron microscope (SEM). For this purpose, a cross section through the layer structure to be determined was conducted manually with a blade (Leica Microtome Blades 819). The cross section was sputtered with gold (Cressington 108auto from Cressington Scientific Instruments Ltd., Watford (UK)) and then analysed by SEM (Quanta 450, FEI Deutschland GmbH, Frankfurt) under high vacuum (p < 7.0·10⁻⁵ Pa). The layer thicknesses of the individual layers were ascertained with the "xT Microscope Control" software, version 6.2.11.3381, FEI Company, Frankfurt, Germany.

### Viscosity number of PA

The viscosity number of PA is measured according to the standard DIN EN ISO 307 (2013) in 95% sulfuric acid.

### Molecular weight distribution

Molecular weight distribution is measured by gel permeation chromatography by means of light scattering: ISO 16014-3/-5 (2009-09).

### Moisture content of cardboard

The moisture content of the cardboard is measured according to the standard ISO 287:2009.

### Adhesion

The adhesion of two adjacent layers is determined by fixing them in a 90° peel test instrument, for example the Instron *"German rotating wheel fixture",* on a rotatable roller which rotates at 40 mm/min during the measurement. The samples had been cut beforehand into strips 15 mm wide. On one side of the sample, the laminas are detached from one another and the detached end is clamped in a tensile device directed vertically upward. A measuring instrument to determine the tensile force is attached to the tensile device. As the roller rotates, the force needed to separate the laminas from one another is measured. This force corresponds to the adhesion of the layers to one another and is reported in N/15 mm. The separation of the individual layers can be effected mechanically, for example, or by means of a controlled pretreatment, for example by soaking the sample in 30% acetic acid at 60°C for 3 min.

### Detection of colourants

Detection of organic colourants can be conducted in accordance with the methods described in "Industrial Organic Pigments, Third Edition" (Willy Herbst, Klaus Hunger Copyright © 2004 WILEY-VCH Verlag GmbH & Co. KGaA, Weinheim ISBN: 3-527-30576-9).

### Adhesion of opening aid

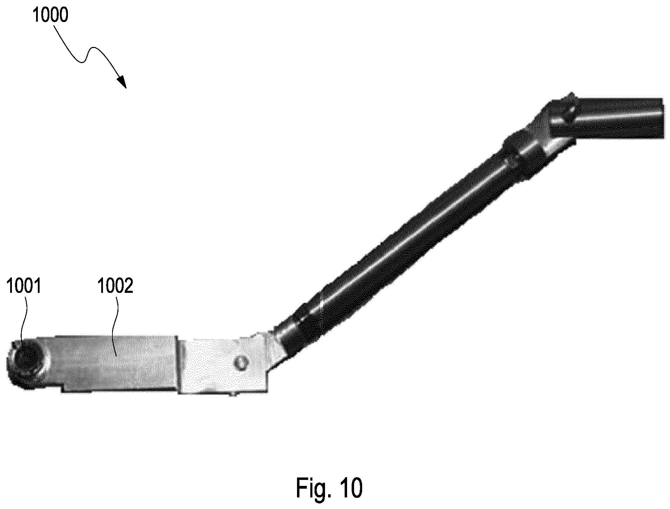

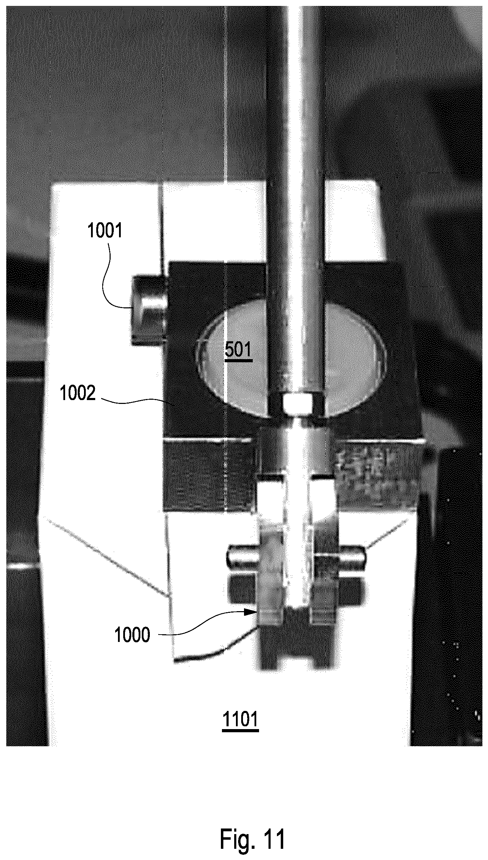

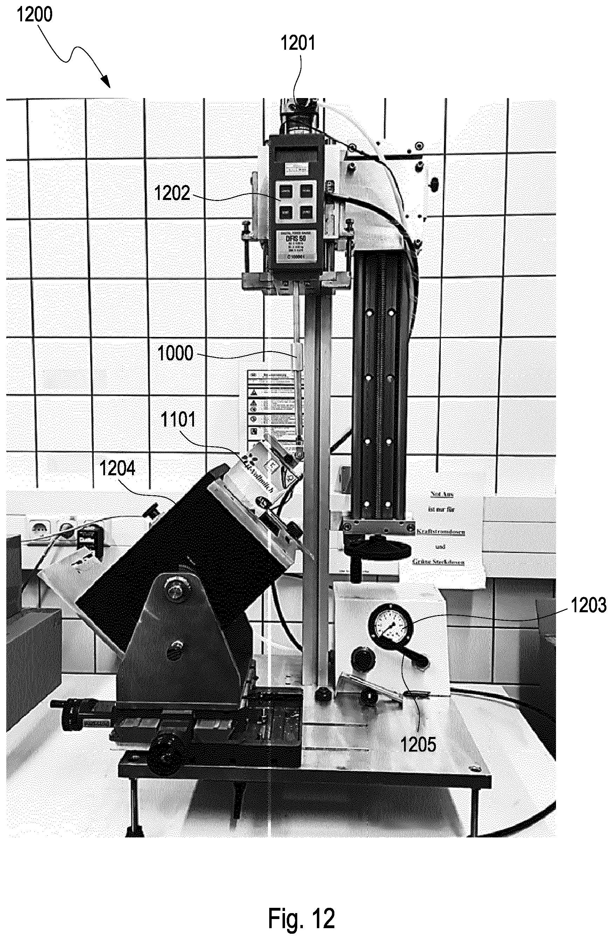

The measurement device (see Figure 12) used to determine the adhesion of opening aids to containers is an electronic Chatillon DFIS 50 portable measuring instrument, from Ametek, Meer-busch, Germany, having a pull-off device as shown in Figures 10 and 11. The pull-off device here is an arm having two articulated joints and, at one end, a clamping ring to accommodate the opening aid which can be fixed in the clamping ring with an Inbus screw.

To perform the measurement, the pull-off device is secured at one end to the measurement unit and at the other end to the opening aid to be tested by means of the clamping ring, and aligned. For this purpose, the opening aid is fixed in the clamping ring with the Inbus screw as shown in Figure 11. The container is then fixed by a fixing unit as can be seen in Figure 12, such that it remains in position when the opening aid is pulled by means of the pull-off device. For measurement, the pneumatic cylinder of the test apparatus triggers a vertical lifting movement which is converted to a rotary lifting movement by the pull-off device of the test device. For the measurement, the force with which the opening aid is pulled is increased sufficiently gradually until the opening aid tears off from the container or the laminate breaks, for example as a result of a cardboard fibre tear. If there is tearing of the laminate rather than detachment of the opening aid from the laminate, this is considered to be an optimal result. Otherwise, the last force exerted at which the opening aid has become detached from the laminate is considered to be the result of the adhesion measurement on the individual container. The greater this force, the more advantageous the result. For every measurement, 10 identical containers with an identically secured opening aid are measured and the arithmetic mean is formed as the overall result of the measurement.

The invention is described in more detail hereinafter by examples and drawings, although the examples and drawings do not imply any restriction of the invention. Also, unless otherwise indicated, the drawings are not to scale.

### Laminate construction

For the examples and comparative examples, laminates with the layer construction specified in Table 1 below and the layer sequence were each prepared by a layer extrusion method.

**Table 1: Construction of the laminates used for the examples and comparative examples**

| **Layer designation** | **Material** | **Basis weight [g/m²]** |
|---|---|---|
| Outer polymer layer | LDPE 19N430 from Ineos GmbH, Cologne, Germany | 15 |
| Carrier layer | Cardboard: Stora Enso Natura T Duplex, double coating slip, Scott bond 200 J/m² | 210 |
| Polymer interlayer | LDPE 23L430 from Ineos GmbH, Cologne, Germany | 20 |
| Barrier layer | aluminium, EN AW 8079 from Hydro Aluminium Deutschland GmbH | here thickness 6 µm |
| Inner polymer layer | LDPE 19N430 from Ineos GmbH, Cologne, Germany | 40 |

### Laminate and container production

The laminates were produced with an extrusion coating system from Davis Standard. The extrusion temperature here was in a range from about 280 to 330°C. Deviations in temperatures of ± 6°C are within the normal tolerance. Deviations in the basis weights of ± 3 g/m² are within the normal tolerance. In the first step, the outer polymer layer was applied to the carrier layer. In the second step, the polymer interlayer was applied together with the barrier layer to the carrier layer that had been coated with the outer polymer layer beforehand. In the last step, the inner polymer layer was applied to the barrier layer. For application of the individual layers, the polymers or polymer blends were melted in an extruder. In the case of application of one polymer or polymer blend in a layer, the resultant melt was transferred via a feed block into a nozzle and extruded onto the carrier layer. In the case of application of two or more polymers or polymer blends in a layer, the resultant melts were combined by means of a feed block and then co-extruded onto the carrier layer.

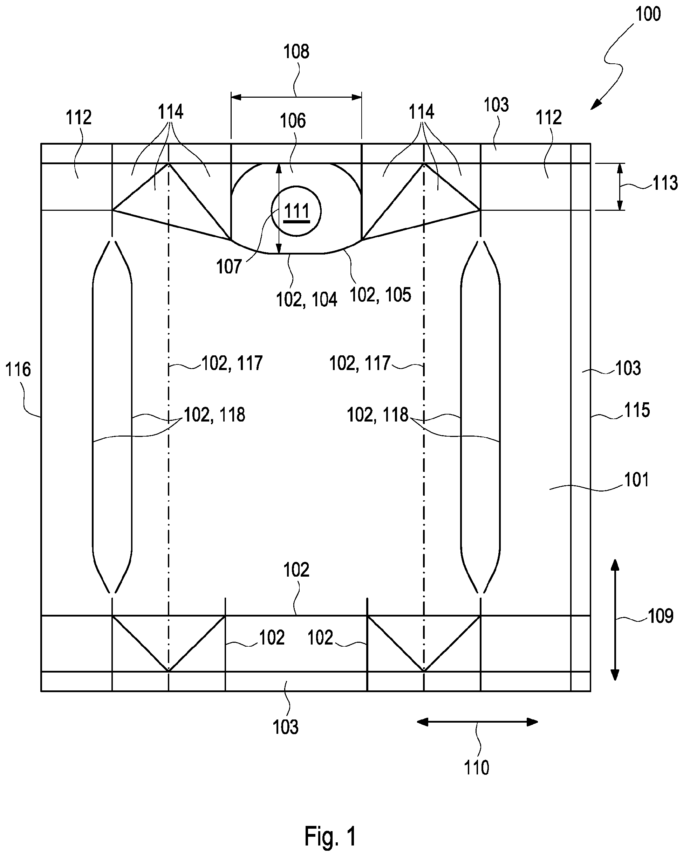

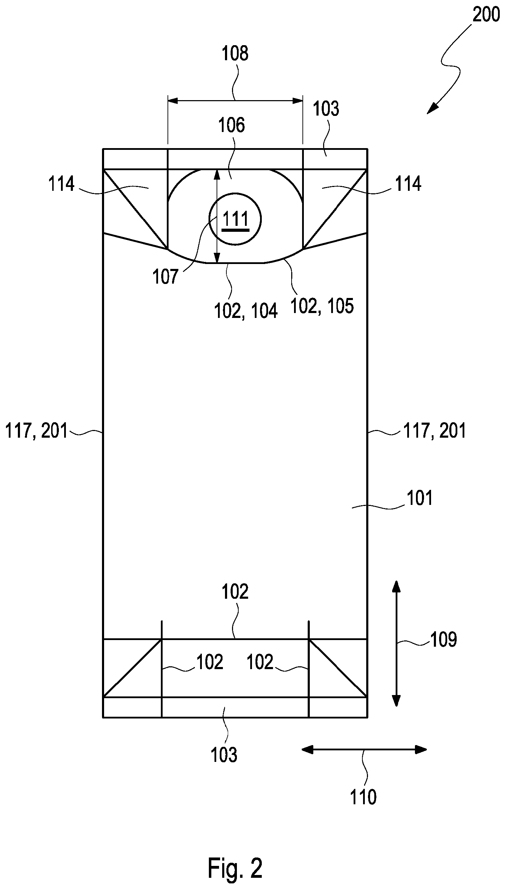

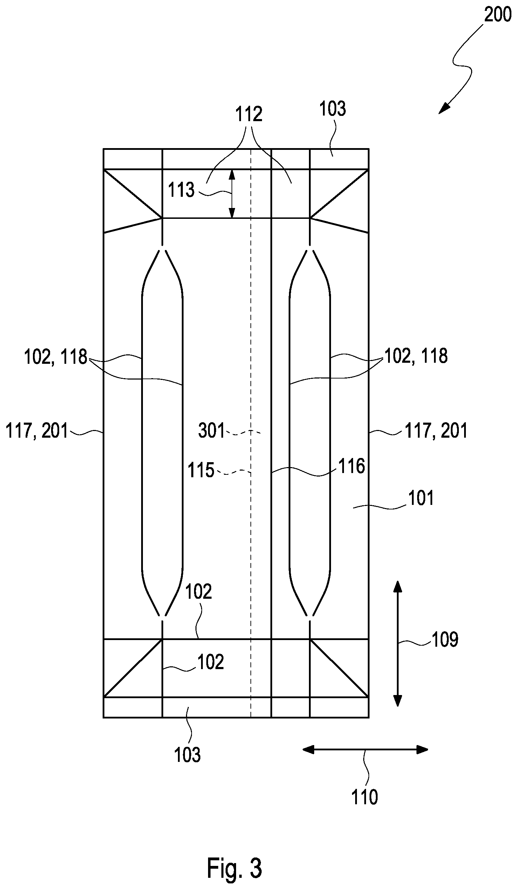

Grooves were introduced on the outer face into the laminates obtained as described above according to Figure 1. In this case, the groove pattern shown in Figure 1 was introduced into the laminate for each container to be manufactured from the laminate. In this case, for the various examples and comparative examples, the first length L₁, the second length L₂, the third length L₃ and the size of the hole in the carrier layer, i.e. the further surface area, were varied such that the values specified in Table 2 were attained. In addition, the grooved laminate was divided into blanks for individual containers, each blank including one of the above holes and one of the groove patterns according to Figure 1. By folding along the 4 longitudinal grooves of each and every blank and sealing of overlapping fold faces, a container precursor as shown in Figures 2 and 3 was obtained in each case. This container precursor is also referred to as a shell.

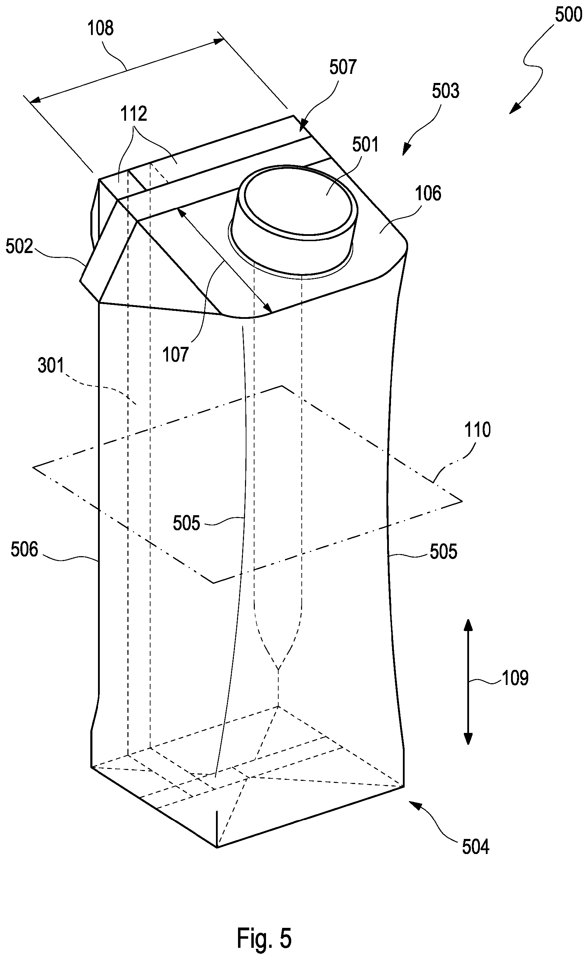

This shell was used to produce a closed container of the shape shown in Figure 5 in a CFA 712 standard filling machine, SIG Combibloc, Linnich. This involved producing a base region by folding and closing by heat-sealing. This gave rise to a beaker that was open at the top. The beaker was sterilized with hydrogen peroxide. In addition, the beaker was filled with water. By folding and ultrasound sealing, the top region of the beaker including the hole was closed and hence a closed container was obtained. An opening aid of the type disclosed in EP 1 812 298 B1 was glued to this container over the hole with a Euromelt 510 adhesive from Henkel, Düsseldorf. After the adhesive had cured, identical containers in each case were examined according to the above test methods with regard to the adhesion of the opening aid, or opened by means of the opening aid and examined with regard to pouring characteristics. The opening aid opens the container according to paragraph [0002] of EP 1 812 298 B1 with a puncturing and cutting movement through the membrane that spans the hole and is formed by the hole-covering layers. In the case of optimal function, about 90% of the membrane radius defined by the cutting ring is cut through, and there is only a connection to the container at one point. The membrane folds away to the side and the container contents can be poured out without disruption. If, by contrast, when the water was poured out, it ran out to the side of the container or, as a result of an un-cleanly formed pouring hole, there was irregular - "slopping" - outflow, this was given an adverse assessment.

**Table 2: Parameters varied in the examples and comparative examples, where the examples 1 to 3 and 10 to 12 are according to the invention, and the examples 4 to 9 and the comparative examples 1 to 6 are not according to the invention**

| | **L₁/L₂** | **L₁/L₃** | **First surface area / further surface area** | **Amount of adhesive used [mg]** |
|---|---|---|---|---|
| **Example 1** | 0.7 | 1.5 | 15 | 250 |
| **Example 2** | 0.7 | 1.5 | 15 | 150 |
| **Example 3** | 0.7 | 1.5 | 15 | 100 |
| **Example 4** | 0.2 | 1.5 | 15 | 250 |
| **Example 5** | 0.2 | 1.5 | 15 | 150 |
| **Example 6** | 0.2 | 1.5 | 15 | 100 |
| **Example 7** | 2 | 1.5 | 15 | 250 |
| **Example 8** | 2 | 1.5 | 15 | 150 |
| **Example 9** | 2 | 1.5 | 15 | 100 |
| **Example 10** | 0.7 | 2.4 | 15 | 100 |
| **Example 11** | 0.7 | 1.5 | 6 | 100 |
| **Example 12** | 0.7 | 2.4 | 6 | 100 |
| **Comparative example 1** | 0.1 | 1.5 | 15 | 250 |
| **Comparative example 2** | 0.1 | 1.5 | 15 | 150 |
| **Comparative example 3** | 0.1 | 1.5 | 15 | 100 |
| **Comparative example 4** | 2.5 | 1.5 | 15 | 250 |
| **Comparative example 5** | 2.5 | 1.5 | 15 | 150 |
| **Comparative example 6** | 2.5 | 1.5 | 15 | 100 |

In this context, the ratio L₁/L₃ gives the inclination of the roof. When L₁/L₃ = 1.5, an inclination of the roof relative to the base area by about 5° was achieved. When L₁/L₃ = 2.4, the roof is inclined at about 20° relative to the base area.

### Evaluation

The results of the studies conducted in the context of the examples and comparative examples are summarized in Table 3 below, where the examples 1 to 3 and 10 to 12 are according to the invention, and the examples 4 to 9 and the comparative examples 1 to 6 are not according to the invention.

**Table 3: Results of the examples and comparative examples with regard to the adhesion of the opening aid and the pouring characteristics after opening of the container with the opening aid**

| | **Adhesion of the opening aid [N]** | **Pouring characteristics** |
|---|---|---|
| **Example 1** | 45 | 0 |
| **Example 2** | 50 | ++ |
| **Example 3** | 53 | ++ |
| **Example 4** | 48 | 0 |
| **Example 5** | 44 | ++ |
| **Example 6** | 30 | + |
| **Example 7** | 46 | 0 |
| **Example 8** | 50 | ++ |
| **Example 9** | 33 | + |
| **Example 10** | 48 | ++ |
| **Example 11** | 50 | ++ |
| **Example 12** | 48 | ++ |
| **Comparative Example 1** | 45 | 0 |
| **Comparative Example 2** | 20 | 0 |
| **Comparative Example 3** | 3 | - |
| **Comparative Example 4** | 45 | 0 |
| **Comparative Example 5** | 18 | 0 |
| **Comparative Example 6** | Opening aid does not adhere | - |

For the pouring characteristics, the symbols in Table 3 have the following meanings:
"++" a more advantageous result than "+",
"+" a more advantageous result than "0", and
"0" a more advantageous result than "-"

In the experiments, the use of a relatively large amount of adhesive for securing the opening aid regularly led to overflowing of the adhesive onto the covered hole. The cured adhesive on the covered hole led to non-ideal opening characteristics. Unclean pouring holes were frequently obtained, which led to non-ideal pouring characteristics. The less adhesive is used, the greater the risk that the opening aid will not adhere well to the container or that the opening aid will not be joined tightly to the container. The latter in turn can lead to unclean pouring characteristics. It is clearly apparent from the above Tables 2 and 3 that, according to the inventive examples by comparison with the non-inventive comparative examples, at least equally good if not even better results can be achieved with regard to the adhesive strength of the opening aid to the container and the pouring characteristics with use of less adhesive. For practical purposes, the adhesion of the opening aid to the container should be at least 25 N. Containers having lower adhesion to the opening aid are not recommended for sale for quality assurance reasons. In Comparative Example 6, the amount of adhesive was insufficient to secure the opening aid on the container such that it could be opened therewith at all. It is additionally apparent from the comparison of Examples 3 with 10 and 11 with 12 that, in accordance with the invention, even in the case of an elevated inclination of the container roof relative to the base area, satisfactory results were achievable for the pouring characteristics and the adhesion of the opening area. It is additionally apparent from the comparison of Examples 3 with 11 and 10 with 12 that, in accordance with the invention, even in the case of larger opening holes in relation to the roof area, satisfactory results were achievable for the pouring characteristics and the adhesion of the opening area.

The figures respectively show, unless stated otherwise in the description or the respective fig-ure, in schematic form and not to scale:
- Figure 1: a sheetlike composite according to the invention in top view;
- Figure 2: a container precursor according to the invention in a top view of the front side;
- Figure 3: the container precursor according to the invention from Figure 2 in a top view of the reverse side;
- Figure 4: the container precursor according to the invention from Figure 2 after folding up;
- Figure 5: a closed container according to the invention;
- Figure 6: a detail of a sheetlike composite according to the invention in a cross section;
- Figure 7: a flow diagram of a method according to the invention for producing a sheetlike composite;
- Figure 8: a flow diagram of a method according to the invention for producing a container precursor;
- Figure 9: a flow diagram of a method according to the invention for producing a closed container;
- Figure 10: a photograph of the pull-off device of the measurement device for determination of the adhesion of opening aids to containers;
- Figure 11: a photograph of the pull-off device of the measurement device secured to an opening aid of a noninventive container for determination of the adhesion of opening aids to containers; and
- Figure 12: a photograph of the measurement device for determination of the adhesion of opening aid to containers.

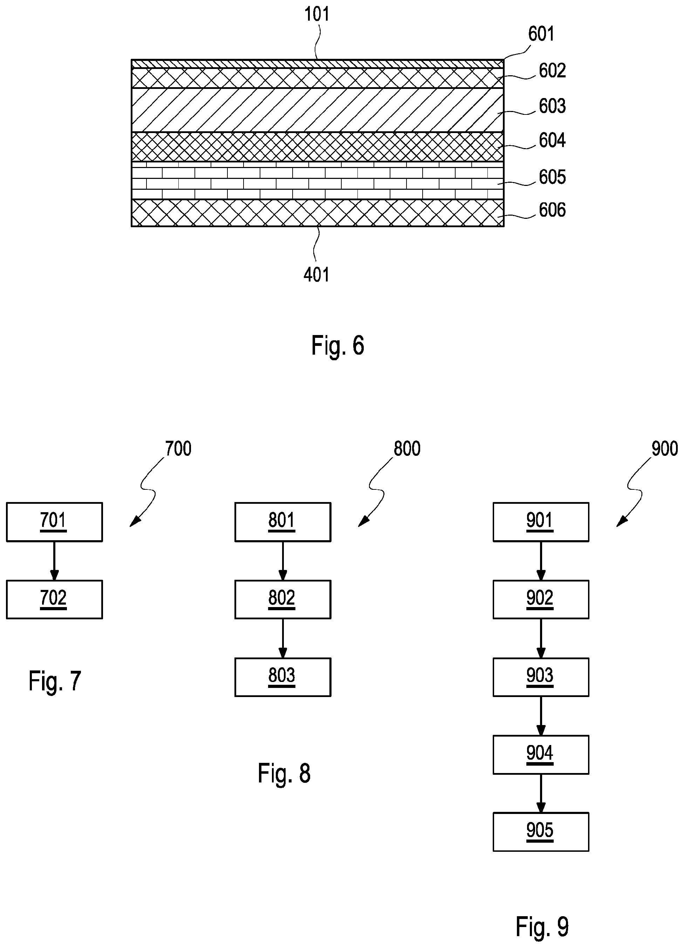

Figure 1 shows a sheetlike composite 100 according to the invention in top view. The sheetlike composite 100 shown in Figure 1 is a blank for production of a single closed container 500. The sheetlike composite 100 is a laminate having, in a direction from an outer face 101 of the sheetlike composite 100 to an inner face 401 (not visible in Figure 1), the layer structure shown in Figure 6. In addition, the sheetlike composite 100 has a multitude of groove lines 102. The groove lines 102 are arranged and configured such that, by folding the sheetlike composite 100 along the groove lines 102 and joining seam areas 103 of the sheetlike composite 100 thereby obtaining seams, a closed container 500 is obtainable. This closed container 500 has a roof area 507 (see Figure 5). This roof area 507 is formed by a first part-area 106 of the roof area 507 and by 2 further part-areas 112 of the roof area 507. The roof area 507 bounds the upright container 500 at the top. A first portion of the groove lines 104 of the multitude of groove lines 102 forms a circumference of the first part-area 106 of the roof area 507. The groove lines 104 of the first portion, relative to the first part-area 106 of the roof area 507, have partly convex curvature (groove line sections 105). As a result, the corners of the first part-area 106 are rounded, as can be seen in Figure 1. The first part-area 106 of the roof area 507 has a first length (L₁) 107 in a longitudinal direction 109 and has a second length (L₂) 108 in a circumferential direction 110 at right angles to the longitudinal direction 109. The two further part-areas 112 each have a third length (L₃) 113 in the longitudinal direction 109. A ratio of the first length 107 to the second length 108 is 0.72. A ratio of the first length 107 to the third length 113 is 1.92. The layer construction of the laminate especially includes a carrier layer 603 made of a cardboard material. This carrier layer 603, in the first part-area 106 of the roof area 507, has a circular hole 111 having a diameter of 22 mm. The hole 111 in the carrier layer 603 is covered by an outer polymer layer 602, a polymer interlayer 604, a barrier layer 605 and an inner polymer layer 606 as hole-covering layers. The hole-covering layers form a membrane that spans the hole 111, since they are joined to one another in the region of the hole 111. The first part-area 106 has a first surface area and the hole 111 a further surface area. A ratio of the first surface area to the further surface area is 4.4. The first part-area 106 of the roof area 507 is arranged in the circumferential direction 110 between two groups each of three triangular areas 114 bounded by groove lines 102 of the multitude of groove lines 102. In addition, the sheetlike composite 100 has 4 longitudinal grooves 117, 118, each of which run from an upper edge of the composite 100 down to a lower edge of the composite 100 in Figure 1. 2 of these 4 longitudinal grooves (longitudinal grooves 118) each include 2 bifurcations between which the respective longitudinal groove 118 takes the form of 2 parallel groove lines running parallel to one another. These two longitudinal grooves 118, in the closed container 500 to be produced from the sheetlike composite 100, form 2 rear longitudinal edges 506 which are not rounded but flattened. The two other longitudinal grooves 117 (shown in Figure 1 as dash-and-dot lines) serve for production of a container pre-cursor 200 from the sheetlike composite 100. For this purpose, the sheetlike composite 100 is folded along the two aforementioned longitudinal grooves 117 such that the further longitudinal edge 116 comes to rest on a seam area 103 at the first longitudinal edge 115. This seam area 103 is then sealed to the further longitudinal edge 116 so as to form a shell-like structure as shown in Figures 2 to 4. However, the two aforementioned longitudinal grooves 117 do not form longitudinal edges in the closed container 500. Instead, these two longitudinal grooves 117 in the container 500 lie on lateral wall faces of the container 500.The container 500 includes, as can be seen in Figure 5, 2 rounded front longitudinal edges 505, along which the composite 100 is bent, but not folded, in circumferential direction 110. The bending here results from the convex curvature of the groove lines 105 of the first portion.

Figure 2 shows a container precursor 200 according to the invention in a top view of its front side. The container precursor 200 was produced from the sheetlike composite 100 of Figure 1. Here, the sheetlike composite 100 is folded along the two longitudinal grooves 117 shown by dotted lines in Figure 1 (folds 201). In addition, the first longitudinal edge 115 and the further longitudinal edge 116 are sealed to one another in seam areas 103, such that they form a longitudinal seam 301 which is on a reverse side of the container precursor 200, i.e. cannot be seen in Figure 2. The container precursor 200 can be seen in Figure 2 in a flat-folded state after the sealing of the longitudinal seam 301.

Figure 3 shows the container precursor according to the invention from Figure 2 in a top view of its reverse side. Here, the longitudinal seam 301 already described for Figure 2 can be seen. Along this longitudinal seam 301, the two further part-areas 112 of the roof area 507 are joined and joined to one another. The dotted line shown in Figure 3 indicates the first longitudinal edge 115 which is now on the inside and hence concealed, and the seam area 103 along which the first longitudinal edge 115 is joined to the further longitudinal edge 116.

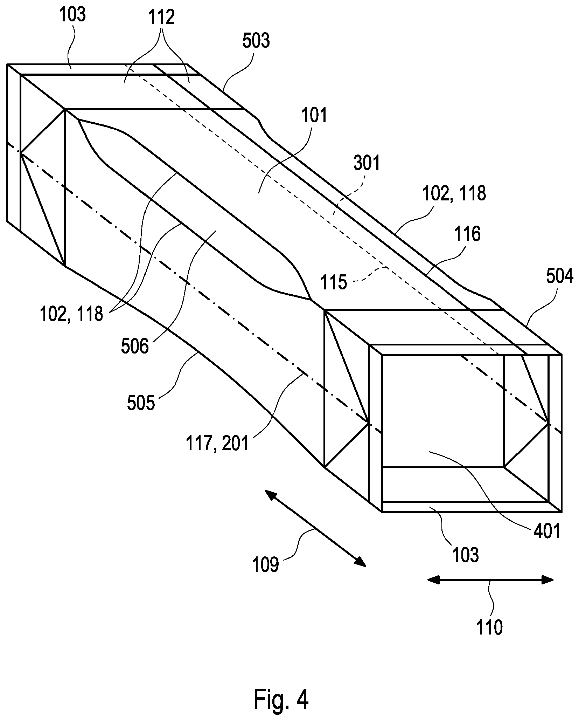

Figure 4 shows the container precursor according to the invention from Figure 2 after folding up. Looking into the container precursor 200, it is possible to see the inner face 401 of the sheetlike composite 100. The two longitudinal grooves 117 shown by dash-and-dot lines, along which the composite was folded flat in Figures 2 and 3 (folds 201), are now on wall faces of the container precursor 200 and do not form longitudinal edges. Along the two other longitudinal grooves 118, longitudinal folds have formed as a result of the shaping up, and so longitudinal edges 506 have been formed. As a result of the bifurcations present in the longitudinal grooves 118, these longitudinal edges 506 contain flattened regions. The longitudinal edges 505 that point downward in Figure 4 are not formed by folds between a top region 503 and a base region 504, but rounded. As a result, the container precursor 200, as indicated in Figure 4, already has a slight constriction which makes the container 500 more easily grippable, such that it lies better in the hand and, especially after water condensation has formed on the outer face 101, slides less easily out of the hand.

Figure 5 shows a closed container 500 according to the invention which has been obtained from the container precursor 200 from Figure 4 in a filling machine. The container 500 includes an opening aid 501 which is joined to the roof area 507 and has a lid. In the interior, the opening aid 501 includes a cutting ring for cutting through the hole-covering layers in the region of the hole 111. The cutting-open occurs automatically when the lid is opened by rotation on a screw thread. In the top region 503, the container 500 is closed by means of a fin seam 502 formed by 2 seam areas 103 sealed to one another by means of ultrasound. Along the fin seam 502, the further part-areas 112 and the first part-area 106 are put together and joined to one another to form the roof area 507. In this context, the fin seam 502 itself does not form part of the roof area 507. In the base region 504 too, the container 500 is closed. The base region 504 was closed by hot air sealing. Also visible in Figure 5 are rounded longitudinal edges 505 which, pointing downward in Figure 4, were essentially covered. The non-rounded but flattened longitudinal edges 506 point toward the back in Figure 5. What is also apparent from Figure 5 is the terminology of the circumferential direction 110, which is indicated here by a dash-and-dot line.

Figure 6 shows a detail of a sheetlike composite 100 according to the invention in a cross section. In this context, Figure 6 shows the layer structure of the sheetlike composite 100 of Fig-ures 1 to 5. Accordingly, the sheetlike composite 100 consists of the following adjoining layers of a layer sequence in a direction from the outer face 101 of the sheetlike composite 100 to the inner face 401 of the sheetlike composite 100: a colour application 601, an outer polymer layer 602 of LDPE 19N430 from Ineos GmbH, Cologne, Germany in a basis weight of 15 g/m²; a carrier layer 603 composed of a cardboard Stora Enso Natura T Duplex with double coating slip, a Scott Bond value of 200 J/m² and a basis weight of 210 g/m²; a polymer interlayer 604 of LDPE 23L430 from Ineos GmbH, Cologne, Germany with a basis weight of 20 g/m²; a barrier layer 605 of an EN AW 8079 aluminium foil from Hydro Aluminium Deutschland GmbH with a thickness of 6 µm; and an inner polymer layer 606 of LDPE 19N430 from Ineos GmbH, Cologne, Germany in a basis weight of 40 g/m².

Figure 7 shows a flow diagram of a method 700 according to the invention for production of a sheetlike composite 100. The method 700 comprises a method step a) 701: providing a sheetlike composite precursor including, as mutually superposed layers of a layer sequence in a direction from an outer face of the sheetlike composite precursor to an inner face of the sheetlike composite precursor: a colour application 601, an outer polymer layer 602, a carrier layer 603, a polymer interlayer 604, a barrier layer 605 and an inner polymer layer 606. In this case, the composite precursor is provided in the form of roll material. In a method step b) 702, the multitude of groove lines 102 shown in Figure 1 is introduced as a repeating groove line pattern in multiple instances alongside one another into the sheetlike composite precursor. The groove lines 102 of the multitude of groove lines 102 are introduced here in the form of an introduction of a multitude of linear depressions on the outer face of the sheetlike composite precursor. For this purpose, the sheetlike composite precursor is contacted on the outer face and simultaneously on the inner face with a grooving tool. In this process, linear regions of the sheetlike composite precursor on the inner face are indented into recesses in the grooving tool. Thus, the linear depressions are obtained in the form of linear material displacements which on the inner face constitute bulges of the sheetlike composite precursor. Subsequently, the sheetlike composite precursor is cut to size to form a multitude of blanks for production of single closed containers 500, where each blank contains exactly one instance of the multitude of grooves 102 according to Figure 1, such that the sheetlike composite 100 shown in Figure 1 is obtained.

Figure 8 shows a flow diagram of a method 800 according to the invention for production of the container precursor 200 from Figures 2 and 3. In a method step a. 801, the sheetlike composite 100 from Figure 1 is provided. This can be effected by the method 700 of Figure 7. In a method step b. 802, the sheetlike composite is folded along groove lines 102 of the multitude of groove lines 102 such that the folds 201 of Figure 2 are obtained. In a method step c. 803, the composite 100 is further folded along the folds 201, such that the first longitudinal edge 115 and the further longitudinal edge 116 come to rest against one another along a seam area 103. Further, the first longitudinal edge 115 and the further longitudinal edge 116 are sealed to one another, so as to give rise to a longitudinal seam 301 as can be seen in Figure 3.

Figure 9 shows a flow diagram of a method 900 according to the invention for production of the closed container 500 from Figure 5. In a method step A) 901, the container precursor 200 according to Figure 4 is provided. In a method step B) 902, a base region 504 of the container precursor 200 is shaped by folding the sheetlike composite 100 along groove lines 102 of the multitude of groove lines 102 provided in the base region 504, and hence a base of the container precursor 200 is formed. This base is closed by hot air sealing in a method step C) 903. Subsequently, the container precursor 200 is sterilized from the inside by rinsing with hydrogen peroxide. In a method step D) 904, the container precursor 200 is filled via the still-open top region 503 with a liquid food or drink product. In a subsequent method step D) 904, the top region 503 is closed by ultrasound sealing and hence the roof area 507 is also obtained by forming a fin seam 502. In a method step F) 905, the first part-area 106 of the roof area 507 of the closed container 500 is joined to an opening aid 501 by adhesive bonding. Thus, the closed container 500 in Figure 5 is obtained.

Figure 10 shows a photograph of the pull-off device 1000 of the measurement device 1200 for determination of the adhesion of opening aids 501 to containers. The pull-off device 1000 is an arm having two articulated joints and, at one end, a clamping ring 1002 to accommodate the opening aid 501 which can be fixed in the clamping ring 1002 with an Inbus screw 1001.

Figure 11 shows a photograph of the pull-off device 1000 of the measurement device 1200 secured to an opening aid 501 of a noninventive container 1101 for determination of the adhesion of opening aids 501 to containers. The opening aid 501 of the container 1101 is fixed here in the clamping ring 1002 by means of the Inbus screw 1001.

Figure 12 shows a photograph of the measurement device 1200 for determination of the adhesion of opening aids 501 to containers. What can be seen is a noninventive container 1101, at one end of which is secured, as shown in Figure 11, the pull-off device 1000. The other end of the pull-off device 1000 is secured to the measurement unit 1202. The opening aid 501 is pulled by a vertical lifting movement of the pneumatic cylinder 1201, which can be adjusted by means of the manometer 1203 and the hand lever 1206. The resulting force can be read off from the measurement unit 1202. The pull-off device 1000 deflects the lifting movement and transmits the force to the opening aid 501. When pulling on the opening aid 501, the container 1101 is kept in position by means of a fixing unit 1204.

### LIST OF REFERENCE SIGNS

- **100**: Sheetlike composite according to the invention
- **101**: Outer face
- **102**: Groove of the multitude of grooves
- **103**: Seam area
- **104**: Grooves of the first portion of the multitude of grooves
- **105**: Convex-curved part of a groove
- **106**: First part-area of the roof area
- **107**: First length L₁
- **108**: Second length L₂
- **109**: Longitudinal direction
- **110**: Circumferential direction
- **111**: Hole
- **112**: Further part-area of the roof area
- **113**: Third length L₃
- **114**: Triangular area bounded by groove lines of the multitude of groove lines
- **115**: First longitudinal edge
- **116**: Further longitudinal edge
- **117**: Longitudinal groove from which no longitudinal edge is formed
- **118**: Longitudinal groove from which a flattened longitudinal edge is formed
- **200**: Container precursor according to the invention
- **201**: Fold
- **301**: Longitudinal seam
- **401**: Inner face
- **500**: Closed container according to the invention
- **501**: Opening aid with lid
- **502**: Fin seam
- **503**: Top region
- **504**: Base region
- **505**: Rounded longitudinal edge
- **506**: Non-rounded longitudinal edge
- **507**: Roof area
- **601**: Colour application
- **602**: Outer polymer layer
- **603**: Carrier layer
- **604**: Polymer interlayer
- **605**: Barrier layer
- **606**: Inner polymer layer
- **700**: Method according to the invention for production of a sheetlike composite
- **701**: Method step a)
- **702**: Method step b)
- **703**: Method step c)
- **704**: Method step d)
- **800**: Method according to the invention for producing a container precursor
- **801**: Method step a.
- **802**: Method step b.
- **803**: Method step c.
- **900**: Method according to the invention for producing a closed container
- **901**: Method step A)
- **902**: Method step B)
- **903**: Method step C)
- **904**: Method step D)
- **905**: Method step E)
- **1000**: Pull-off device
- **1001**: Inbus screw
- **1002**: Clamping ring
- **1101**: Noninventive container
- **1200**: Measurement device for measuring the adhesion of opening aids
- **1201**: Pneumatic cylinder
- **1202**: Measurement unit
- **1203**: Manometer
- **1204**: Fixing unit
- **1205**: Hand lever

## Claims

1. A sheetlike composite (100) comprising, as mutually superposed layers of a layer sequence in a direction from an outer face (101) of the sheetlike composite (100) to an inner face (401) of the sheetlike composite (100),
a) a carrier layer (603),
b) a barrier layer (605), and
c) an inner polymer layer (606),
wherein the inner polymer layer (606) includes a polyethylene or a polypropylene or a mixture of the two,
wherein the sheetlike composite (100) has a multitude of groove lines (102) arranged and configured such that, by folding the sheetlike composite (100) along the groove lines (102) and joining seam areas (103) of the sheetlike composite (100) thereby obtaining seams, a closed container (500) is obtainable,
wherein the closed container (500) has a roof area (507),
wherein a first portion of the groove lines (104) of the multitude of groove lines (102) at least partly forms a circumference of a first part-area (106) of the roof area (507),
wherein the groove lines (104) of the first portion, relative to the first part-area (106) of the roof area (507), have at least partly convex curvature,
wherein the first part-area (106) of the roof area (507) has a first length (107) in a longitudinal direction (109) and has a second length (108) in a circumferential direction (110) at right angles to the longitudinal direction (109),
wherein a ratio of the first length (107) to the second length (108) is in a range from 0.3 to 1.2,
wherein the sheetlike composite (100) has at least one further part-area (112) of the roof area (507),
wherein the first part-area (106) of the roof area (507) and the at least one further part-area (112) of the roof area (507) are arranged and formed such that they together form the roof area (507) of the closed container (500) in the closed container (500),
wherein the at least one further part-area (112) of the roof area (507) has a third length (113) in the longitudinal direction (109),
wherein the carrier layer (603) has a hole (111) in the first part-area (106) of the roof area (507),
wherein the first part-area (106) of the roof area (507) has a first surface area,
wherein the hole (111) has a further surface area,
where a ratio of the first surface area to the further surface area is in a range from 1.5 to 35.0,
**characterised in that** a ratio of the first length (107) to the third length (113) is in a range from 1.0 to 3.0.

2. The sheetlike composite (100) according to Claim 1, wherein the sheetlike composite (100) is a blank for production of a single closed container (500).

3. The sheetlike composite (100) according to Claim 1 or 2, wherein the hole (111) is covered at least by the barrier layer (605) and the inner polymer layer (606) as hole-covering layers.

4. The sheetlike composite (100) according to any of the preceding claims, wherein the third length (113) is different from the first length (107).

5. A method (700) comprising, as method steps:
a) providing a sheetlike composite precursor including a carrier layer (603);
b) introducing a multitude of groove lines (102) into the sheetlike composite precursor;
c) superimposing the carrier layer (603) with a barrier layer (605); and
d) superimposing the barrier layer (605) on a side of the barrier layer (605) remote from the carrier layer (603) with an inner polymer layer (606) thereby obtaining the sheetlike composite (100),
wherein the inner polymer layer (606) includes a polyethylene or a polypropylene or a mixture of the two,
wherein the groove lines (102) of the multitude of groove lines (102) are introduced such that, by folding a sheetlike composite (100) obtained from the sheetlike composite precursor along the groove lines (102) and joining seam areas (103) of the sheetlike composite (100) thereby obtaining seams, a closed container (500) is obtainable,
wherein the closed container (500) has a roof area (507),
wherein a first portion of the groove lines (104) of the multitude of groove lines (102) at least partly forms a circumference of a first part-area (106) of the roof area (507),
wherein the groove lines (104) of the first portion, relative to the first part-area (106) of the roof area (507), have at least partly convex curvature,
wherein the first part-area (106) of the roof area (507) has a first length (107) in a longitudinal direction (109) and has a second length (108) in a circumferential direction (110) at right angles to the longitudinal direction (109),
wherein a ratio of the first length (107) to the second length (108) is in a range from 0.3 to 1.2,
wherein the sheetlike composite (100) has at least one further part-area (112) of the roof area (507),
wherein the first part-area (106) of the roof area (507) and the at least one further part-area (112) of the roof area (507) are arranged and formed such that they together form the roof area (507) of the closed container (500) in the closed container (500),
wherein the at least one further part-area (112) of the roof area (507) has a third length (113) in the longitudinal direction (109),
wherein the carrier layer (603) has a hole (111) in the first part-area (106) of the roof area (507),
wherein the first part-area (106) of the roof area (507) has a first surface area, wherein the hole (111) has a further surface area,
where a ratio of the first surface area to the further surface area is in a range from 1.5 to 35.0,
**characterised in that** a ratio of the first length (107) to the third length (113) is in a range from 1.0 to 3.0.

6. A method (700) comprising, as method steps:
a) providing a sheetlike composite precursor including a carrier layer (603); and
b) introducing a multitude of groove lines (102) into the sheetlike composite precursor,
wherein the sheetlike composite precursor in the method step a) comprises, in the form of mutually superposed layers of a layer sequence, in a direction from an outer face of the sheetlike composite precursor to an inner face of the sheetlike composite precursor:
A. the carrier layer (603),
B. a barrier layer (605), and
C. an inner polymer layer (606),
wherein the inner polymer layer (606) includes a polyethylene or a polypropylene or a mixture of the two,
wherein in method step b) the sheetlike composite (100) is obtained,
wherein the groove lines (102) of the multitude of groove lines (102) are introduced such that, by folding a sheetlike composite (100) obtained from the sheetlike composite precursor along the groove lines (102) and joining seam areas (103) of the sheetlike composite (100) thereby obtaining seams, a closed container (500) is obtainable,
wherein the closed container (500) has a roof area (507),
wherein a first portion of the groove lines (104) of the multitude of groove lines (102) at least partly forms a circumference of a first part-area (106) of the roof area (507),
wherein the groove lines (104) of the first portion, relative to the first part-area (106) of the roof area (507), have at least partly convex curvature,
wherein the first part-area (106) of the roof area (507) has a first length (107) in a longitudinal direction (109) and has a second length (108) in a circumferential direction (110) at right angles to the longitudinal direction (109),
wherein a ratio of the first length (107) to the second length (108) is in a range from 0.3 to 1.2,
wherein the sheetlike composite (100) has at least one further part-area (112) of the roof area (507),
wherein the first part-area (106) of the roof area (507) and the at least one further part-area (112) of the roof area (507) are arranged and formed such that they together form the roof area (507) of the closed container (500) in the closed container (500),
wherein the at least one further part-area (112) of the roof area (507) has a third length (113) in the longitudinal direction (109),
wherein the carrier layer (603) has a hole (111) in the first part-area (106) of the roof area (507),
wherein the first part-area (106) of the roof area (507) has a first surface area,
wherein the hole (111) has a further surface area,
where a ratio of the first surface area to the further surface area is in a range from 1.5 to 35.0,
**characterised in that** a ratio of the first length (107) to the third length (113) is in a range from 1.0 to 3.0.

7. A sheetlike composite (100) obtainable by the method (700) according to Claim 5 or 6.

8. A container precursor (200) comprising the sheetlike composite (100) according to any of Claims 1 to 4 or 7.

9. A closed container (500) comprising the sheetlike composite (100) according to any of Claims 1 to 4 or 7.

10. A method (800) comprising, as method steps:
a. providing the sheetlike composite (100) according to any of Claims 1 to 4 or 7, the sheetlike composite (100) comprising a first longitudinal edge (115) and a further longitudinal edge (116);
b. folding the sheetlike composite (100) along groove lines (102) of the multitude of groove lines (102); and
c. contacting and joining the first longitudinal edge (115) to the further longitudinal edge (116) thereby obtaining a longitudinal seam (301).

11. A container precursor (200) obtainable by the method (800) according to Claim 10.

12. A method (900) comprising, as method steps:
A) providing the container precursor (200) according to Claim 8 or 11;
B) forming a base region (504) of the container precursor (200) by folding the sheetlike composite (100) along groove lines (102) of the multitude of groove lines (102);
C) closing the base region (504);
D) filling the container precursor (200) with a food or drink product; and
E) closing the container precursor (200) in a top region (503) thereby obtaining a closed container (500).

13. A closed container (500) obtainable by the method (900) according to Claim 12.

14. A use of the sheetlike composite (100) according to any of Claims 1 to 4 or 7 or of the container precursor (200) according to Claim 8 or 11 for production of a food or drink product container.

## Patentansprüche

1. Ein flächenförmiger Verbund (100), beinhaltend als aneinander überlagernde Schichten einer Schichtfolge in Richtung von einer Außenseite (101) des flächenförmigen Verbunds (100) zu einer Innenseite (401) des flächenförmigen Verbunds (100)
a) eine Trägerschicht (603),
b) eine Barriereschicht (605), und
c) eine Polymerinnenschicht (606),
wobei die Polymerinnenschicht (606) ein Polyethylen oder ein Polypropylen oder eine Mischung aus beiden einschließt,
wobei der flächenförmige Verbund (100) eine Vielzahl von Rilllinien (102) aufweist, die so angeordnet und ausgestaltet sind, dass durch Falten des flächenförmigen Verbunds (100) entlang der Rilllinien (102) und Verbinden von Nahtflächen (103) des flächenförmigen Verbunds (100) unter Erhalt von Nähten ein geschlossener Behälter (500) erhältlich ist,
wobei der geschlossene Behälter (500) eine Dachfläche (507) aufweist,
wobei ein erster Teil der Rilllinien (104) der Vielzahl von Rilllinien (102) mindestens teilweise einen Umfang einer ersten Teilfläche (106) der Dachfläche (507) bildet,
wobei die Rilllinien (104) des ersten Teils, bezogen auf die erste Teilfläche (106) der Dachfläche (507), mindestens teilweise konvex gebogen sind,
wobei die erste Teilfläche (106) der Dachfläche (507) in einer Längsrichtung (109) eine erste Länge (107) hat und in einer zu der Längsrichtung (109) senkrechten Umfangsrichtung (110) eine zweite Länge (108) hat,
wobei ein Verhältnis der ersten Länge (107) zu der zweiten Länge (108) in einem Bereich von 0,3 bis 1,2 liegt,
wobei der flächenförmige Verbund (100) mindestens eine weitere Teilfläche (112) der Dachfläche (507) aufweist,
wobei die erste Teilfläche (106) der Dachfläche (507) und die mindestens eine weitere Teilfläche (112) der Dachfläche (507) so angeordnet und ausgebildet sind, dass sie in dem geschlossenen Behälter (500) zusammen die Dachfläche (507) des geschlossenen Behälters (500) bilden,
wobei die mindestens eine weitere Teilfläche (112) der Dachfläche (507) in der Längsrichtung (109) eine dritte Länge (113) hat,
wobei die Trägerschicht (603) in der ersten Teilfläche (106) der Dachfläche (507) ein Loch (111) aufweist,
wobei die erste Teilfläche (106) der Dachfläche (507) einen ersten Flächeninhalt hat, wobei das Loch (111) einen weiteren Flächeninhalt hat,
wobei ein Verhältnis des ersten Flächeninhalts zu dem weiteren Flächeninhalt in einem Bereich von 1,0 bis 35,0 liegt.
**dadurch gekennzeichnet, dass** ein Verhältnis der ersten Länge (107) zu der dritten Länge (113) in einem Bereich von 1,0 bis 3,0 liegt.

2. Der flächenförmige Verbund (100) nach Anspruch 1, wobei der flächenförmige Verbund (100) ein Zuschnitt zum Herstellen eines einzelnen geschlossenen Behälters (500) ist.

3. Der flächenförmige Verbund (100) nach Anspruch 1 oder 2, wobei das Loch (111) mindestens mit der Barriereschicht (605) und der Polymerinnenschicht (606) als Lochdeckschichten überdeckt ist.

4. Flächenförmiger Verbund (100) nach einem der vorstehenden Ansprüche, wobei die dritte Länge (113) von der ersten Länge (107) verschieden ist.

5. Ein Verfahren (700), beinhaltend als Verfahrensschritte:
a) Bereitstellen eines flächenförmigen Verbundvorläufers, beinhaltend eine Trägerschicht (603), und
b) Einbringen einer Vielzahl von Rilllinien (102) in den flächenförmigen Verbundvorläufer,
c) Überlagern der Trägerschicht (603) mit einer Barriereschicht (605); und
d) Überlagern der Barriereschicht (605) auf einer der Trägerschicht (603) abgewandten Seite der Barriereschicht (605) mit einer Polymerinnenschicht (606), wodurch der flächenförmige Verbund (100) erhalten wird,
wobei die Polymerinnenschicht (606) ein Polyethylen oder ein Polypropylen oder eine Mischung aus beiden beinhaltet,
wobei die Rilllinien (102) der Vielzahl von Rilllinien (102) so eingebracht werden, dass durch Falten eines aus dem flächenförmigen Verbundvorläufer erhaltenen flächenförmigen Verbunds (100) entlang der Rilllinien (102) und Verbinden von Nahtflächen (103) des flächenförmigen Verbunds (100) unter Erhalt von Nähten ein geschlossener Behälter (500) erhältlich ist,
wobei der geschlossene Behälter (500) eine Dachfläche (507) aufweist,
wobei ein erster Teil der Rilllinien (104) der Vielzahl von Rilllinien (102) mindestens teilweise einen Umfang einer ersten Teilfläche (106) der Dachfläche (507) bildet,
wobei die Rilllinien (104) des ersten Teils bezogen auf die erste Teilfläche (106) der Dachfläche (507) mindestens teilweise konvex gebogen sind,
wobei die erste Teilfläche (106) der Dachfläche (507) in einer Längsrichtung (109) eine erste Länge (107) hat und in einer zu der Längsrichtung (109) senkrechten Umfangsrichtung (110) eine zweite Länge (108) hat,
wobei ein Verhältnis der ersten Länge (107) zu der zweiten Länge (108) in einem Bereich von 0,3 bis 1,2 liegt,
wobei der flächenförmige Verbund (100) mindestens eine weitere Teilfläche (112) der Dachfläche (507) aufweist,
wobei die erste Teilfläche (106) der Dachfläche (507) und die mindestens eine weitere Teilfläche (112) der Dachfläche (507) so angeordnet und ausgebildet sind, dass sie in dem geschlossenen Behälter (500) zusammen die Dachfläche (507) des geschlossenen Behälters (500) bilden,
wobei die mindestens eine weitere Teilfläche der Dachfläche (507) in der Längsrichtung (109) eine dritte Länge (113) hat,
wobei die Trägerschicht (603) in der ersten Teilfläche (106) der Dachfläche (507) ein Loch (111) aufweist,
wobei die erste Teilfläche (106) der Dachfläche (507) einen ersten Flächeninhalt hat, wobei das Loch (111) einen weiteren Flächeninhalt hat,
wobei ein Verhältnis des ersten Flächeninhalts zu dem weiteren Flächeninhalt in einem Bereich von 1,5 bis 35,0 liegt.
**dadurch gekennzeichnet, dass** ein Verhältnis der ersten Länge (107) zu der dritten Länge (113) in einem Bereich von 1,0 bis 3,0 liegt.

6. Ein Verfahren (700), beinhaltend als Verfahrensschritte:
a) Bereitstellen eines flächenförmigen Verbundvorläufers, beinhaltend eine Trägerschicht (603), und
b) Einbringen einer Vielzahl von Rilllinien (102) in den flächenförmigen Verbundvorläufer,
wobei der flächenförmige Verbundvorläufer im Verfahrensschritt a) in Form von sich gegenseitig überlagernden Schichten einer Schichtfolge in einer Richtung von einer Außenseite des flächenförmigen Verbundvorläufers zu einer Innenseite des flächenförmigen Verbundvorläufers umfasst:
A. die Trägerschicht (603),
B. eine Barriereschicht (605), und
C. eine innere Polymerschicht (606),
wobei die Polymerinnenschicht (606) ein Polyethylen oder ein Polypropylen oder eine Mischung aus beiden beinhaltet,
wobei im Verfahrensschritt b) der flächenförmige Verbund (100) erhalten wird, wobei die Rilllinien (102) der Vielzahl von Rilllinien (102) so eingebracht werden, dass durch Falten eines aus dem flächenförmigen Verbundvorläufer erhaltenen flächenförmigen Verbunds (100) entlang der Rilllinien (102) und Verbinden von Nahtflächen (103) des flächenförmigen Verbunds (100) unter Erhalt von Nähten ein geschlossener Behälter (500) erhältlich ist,
wobei der geschlossene Behälter (500) eine Dachfläche (507) aufweist,
wobei ein erster Teil der Rilllinien (104) der Vielzahl von Rilllinien (102) mindestens teilweise einen Umfang einer ersten Teilfläche (106) der Dachfläche (507) bildet, wobei die Rilllinien (104) des ersten Teils bezogen auf die erste Teilfläche (106) der Dachfläche (507) mindestens teilweise konvex gebogen sind,
wobei die erste Teilfläche (106) der Dachfläche (507) in einer Längsrichtung (109) eine erste Länge (107) hat und in einer zu der Längsrichtung (109) senkrechten Umfangsrichtung (110) eine zweite Länge (108) hat,
wobei ein Verhältnis der ersten Länge (107) zu der zweiten Länge (108) in einem Bereich von 0,3 bis 1,2 liegt
wobei der flächenförmige Verbund (100) mindestens eine weitere Teilfläche (112) der Dachfläche (507) aufweist,
wobei die erste Teilfläche (106) der Dachfläche (507) und die mindestens eine weitere Teilfläche (112) der Dachfläche (507) so angeordnet und ausgebildet sind, dass sie in dem geschlossenen Behälter (500) zusammen die Dachfläche (507) des geschlossenen Behälters (500) bilden,
wobei die mindestens eine weitere Teilfläche (112) der Dachfläche (507) in der Längsrichtung (109) eine dritte Länge (113) hat,
wobei die Trägerschicht (603) in der ersten Teilfläche (106) der Dachfläche (507) ein Loch (111) aufweist,
wobei die erste Teilfläche (106) der Dachfläche (507) einen ersten Flächeninhalt hat, wobei das Loch (111) einen weiteren Flächeninhalt hat,
wobei ein Verhältnis des ersten Flächeninhalts zu dem weiteren Flächeninhalt in einem Bereich von 1,0 bis 35,0 liegt.
**dadurch gekennzeichnet, dass** ein Verhältnis der ersten Länge (107) zu der dritten Länge (113) in einem Bereich von 1,0 bis 3,0 liegt.

7. Ein Flächenförmiger Verbund (100), erhältlich durch das Verfahren (700) nach Anspruch 5 oder 6.

8. Ein Behältervorläufer (200), beinhaltend den flächenförmigen Verbund (100) nach einem der Ansprüche 1 bis 4 oder 7.

9. Ein geschlossener Behälter (500), beinhaltend den flächenförmigen Verbund (100) nach einem der Ansprüche 1 bis 4 oder 7.

10. Ein Verfahren (800), beinhaltend als Verfahrensschritte:
a. Bereitstellen des flächenförmigen Verbunds (100) nach einem der Ansprüche 1 bis 7, oder 9, der flächenförmige Verbund (100) beinhaltend einen ersten Längsrand (115) und einen weiteren Längsrand (116);
b. Falten des flächenförmigen Verbunds (100) entlang von Rilllinien (102) der Vielzahl von Rilllinien (102); und
c. Kontaktieren und Verbinden des ersten Längsrands (115) mit dem weiteren Längsrand (116) unter Erhalt einer Längsnaht (301).

11. Ein Behältervorläufer (200), erhältlich durch das Verfahren (800) nach Anspruch 10.

12. Ein Verfahren (900), beinhaltend als Verfahrensschritte:
A) Bereitstellen des Behältervorläufers (200) nach Anspruch 8 oder 11;
B) Bilden eines Bodenbereichs (504) des Behältervorläufers (200) durch Falten des flächenförmigen Verbunds (100) entlang von Rilllinien (102) der Vielzahl von Rilllinien (102);
C) Verschließen des Bodenbereichs (504);
D) Befüllen des Behältervorläufers (200) mit einem Nahrungsmittel- oder Getränkeprodukt; und
E) Verschließen des Behältervorläufers (200) in einem Kopfbereich (503) unter Erhalt eines geschlossenen Behälters (500).

13. Ein geschlossener Behälter (500), erhältlich durch das Verfahren (900) nach Anspruch 10.

14. Eine Verwendung des flächenförmigen Verbundes (100) nach einem der Ansprüche 1 bis 4 oder 7 oder des Behältervorläufers (200) nach Anspruch 8 oder 11 zur Herstellung eines Lebensmittel- oder Getränkebehälters.

## Revendications

1. Un composite en forme de feuille (100) comprenant des couches superposées mutuellement d'une séquence de couches dans une direction allant d'une face externe (101) du composite en forme de feuille (100) jusqu'à une face interne (401) du composite en forme de feuille (100),
a) une couche support (603),
b) une couche barrière (605), et
c) une couche de polymère interne (606),
dans lequel la couche de polymère interne (606) comporte un polyéthylène ou un polypropylène ou un mélange des deux,
dans lequel le composite en forme de feuille (100) présente une multitude de lignes de rainure (102) disposées et conçues de telle sorte qu'en pliant le composite en forme de feuille (100) le long des lignes de rainure (102) et en joignant les zones de jonction (103) du composite en forme de feuille (100) pour obtenir des jonctions, un récipient fermé (500) peut être obtenu,
dans lequel le récipient fermé (500) présente une zone de toit (507),
dans lequel une première partie des lignes de rainure (104) de la multitude de lignes de rainure (102) forme au moins partiellement une circonférence d'une première partie-zone (106) de la zone de toit (507),
dans lequel les lignes de rainure (104) de la première partie, par rapport à la première partie-zone (106) de la zone de toit (507), présentent une courbure au moins partiellement convexe,
dans lequel la première partie-zone (106) de la zone de toit (507) présente une première longueur (107) dans une direction longitudinale (109) et présente une seconde longueur (108) dans une direction circonférentielle (110) perpendiculaire à la direction longitudinale (109),
dans lequel un rapport entre la première longueur (107) et la seconde longueur (108) est compris entre 0,3 et 1,2,
dans lequel le composite en forme de feuille (100) présente au moins une autre partie-zone (112) de la zone de toit (507),
dans lequel la première partie-zone (106) de la zone de toit (507) et l'au moins une autre partie-zone (112) de la zone de toit (507) sont disposées et formées de telle sorte qu'elles forment ensemble la zone de toit (507) du récipient fermé (500) dans le récipient fermé (500),
dans lequel l'au moins une autre partie-zone (112) de la zone de toit (507) présente une troisième longueur (113) dans la direction longitudinale (109),
dans lequel la couche support (603) présente un trou (111) dans la première partie-zone (106) de la zone de toit (507),
dans lequel la première partie-zone (106) de la zone de toit (507) présente une première surface, dans lequel le trou (111) présente une autre surface,
où un rapport entre la première surface et l'autre surface est compris entre 1,5 et 35,0, **caractérisé en ce qu'**un rapport entre la première longueur (107) et la troisième longueur (113) est compris entre 1,0 et 3,0.

2. Le composite en forme de feuille (100) selon la revendication 1, dans lequel le composite en forme de feuille (100) est une ébauche pour la production d'un seul récipient fermé (500).

3. Le composite en forme de feuille (100) selon la revendication 1 ou 2, dans lequel le trou (111) est recouvert au moins par la couche barrière (605) et la couche de polymère interne (606) en tant que couches de recouvrement de trou.

4. Le composite en forme de feuille (100) selon l'une quelconque des revendications précédentes, dans lequel la troisième longueur (113) est différente de la première longueur (107).

5. Un procédé (700) comprenant, en tant qu'étapes de procédé :
a) fourniture d'un précurseur de composite en forme de feuille comportant une couche support (603) ;
b) introduction d'une multitude de lignes de rainure (102) dans le précurseur de composite en forme de feuille ;
c) superposition de la couche support (603) avec une couche barrière (605) ; et
d) superposition de la couche barrière (605) sur un côté de la couche barrière (605) à l'écart de la couche support (603) avec une couche polymère interne (606), de manière à obtenir le composite en forme de feuille (100)
dans lequel la couche de polymère interne (606) comporte un polyéthylène ou un polypropylène ou un mélange des deux,
dans lequel les lignes de rainure (102) de la multitude de lignes de rainure (102) sont introduites de telle sorte que, en pliant un composite en forme de feuille (100) obtenu à partir du précurseur de composite en forme de feuille le long des lignes de rainure (102) et en joignant les zones de jonction (103) du composite en forme de feuille (100) de manière à obtenir des jonctions, un récipient fermé (500) peut être obtenu,
dans lequel le récipient fermé (500) présente une zone de toit (507),
dans lequel une première partie des lignes de rainure (104) de la multitude de lignes de rainure (102) forme au moins partiellement une circonférence d'une première partie-zone (106) de la zone de toit (507),
dans lequel les lignes de rainure (104) de la première partie, par rapport à la première partie-zone (106) de la zone de toit (507), présentent une courbure au moins partiellement convexe,
dans lequel la première partie-zone (106) de la zone de toit (507) présente une première longueur (107) dans une direction longitudinale (109) et présente une seconde longueur (108) dans une direction circonférentielle (110) perpendiculaire à la direction longitudinale (109),
dans lequel le rapport entre la première longueur (107) et la seconde longueur (108) est compris entre 0,3 et 1,2,
dans lequel le composite en forme de feuille (100) présente au moins une autre partie-zone (112) de la zone de toit (507),
dans lequel la première partie-zone (106) de la zone de toit (507) et au moins une autre partie-zone (112) de la zone de toit (507) sont disposées et formées de telle sorte qu'elles forment ensemble la zone de toit (507) du récipient fermé (500) dans le récipient fermé (500),
dans lequel l'au moins une autre partie-zone (112) de la surface de toit (507) présente une troisième longueur (113) dans la direction longitudinale (109),
dans lequel la couche support (603) présente un trou (111) dans la première partie-zone (106) de la zone de toit (507),
dans lequel la première partie-zone (106) de la zone de toit (507) présente une première surface,
dans lequel le trou (111) présente une autre surface,
où le rapport entre la première surface et l'autre surface est compris entre 1,5 et 35,0,
**caractérisé en ce que** le rapport entre la première longueur (107) et la troisième longueur (113) est compris entre 1,0 et 3,0.

6. Un procédé (700) comprenant, en tant qu'étapes de procédé :
a) fourniture d'un précurseur de composite en forme de feuille comportant une couche support (603) ; et
b) introduction d'une multitude de lignes de rainure (102) dans le précurseur de composite en forme de feuille,
dans lequel le précurseur de composite en forme de feuille de l'étape a) du procédé comprend, sous forme de couches superposées mutuellement d'une séquence de couches, dans une direction allant d'une face externe du précurseur de composite en forme de feuille jusqu'à une face interne du précurseur de composite en forme de feuille :
A. la couche support (603),
B. une couche barrière (605), et
C. une couche de polymère interne (606),
dans lequel la couche de polymère interne (606) comporte un polyéthylène ou un polypropylène ou un mélange des deux,
dans lequel le composite en forme de feuille (100) est obtenu à l'étape b) du procédé, dans lequel les lignes de rainure (102) de la multitude de lignes de rainure (102) sont introduites de telle sorte que, en pliant un composite en forme de feuille (100) obtenu à partir du précurseur de composite en forme de feuille le long des lignes de rainure (102) et en joignant des zones de jonction (103) du composite en forme de feuille (100) de manière à obtenir des jonctions, un récipient fermé (500) peut être obtenu,
dans lequel le récipient fermé (500) présente une zone de toit (507),
dans lequel une première partie des lignes de rainure (104) de la multitude de lignes de rainure (102) forme au moins partiellement une circonférence d'une première partie-zone (106) de la zone de toit (507),
dans lequel les lignes de rainure (104) de la première partie, par rapport à la première partie-zone (106) de la zone de toit (507), présentent une courbure au moins partiellement convexe,
dans lequel la première partie-zone (106) de la zone de toit (507) présente une première longueur (107) dans une direction longitudinale (109) et présente une seconde longueur (108) dans une direction circonférentielle (110) perpendiculaire à la direction longitudinale (109),
dans lequel le rapport entre la première longueur (107) et la seconde longueur (108) est compris entre 0,3 et 1,2,
dans lequel le composite en forme de feuille (100) présente au moins une autre partie-zone (112) de la zone de toit (507),
dans lequel la première partie-zone (106) de la zone de toit (507) et l'au moins une autre partie-zone (112) de la zone de toit (507) sont disposées et formées de telle sorte qu'elles forment ensemble la zone de toit (507) du récipient fermé (500) dans le récipient fermé (500),
dans lequel l'au moins une autre partie-zone (112) de la zone de toit (507) présente une troisième longueur (113) dans la direction longitudinale (109),
dans lequel la couche support (603) présente un trou (111) dans la première partie-zone (106) de la zone de toit (507),
dans lequel la première partie-zone (106) de la zone de toit (507) présente une première surface,
dans lequel le trou (111) présente une autre surface,
où un rapport entre la première surface et l'autre surface est compris entre 1,5 et 35,0, **caractérisé en ce qu'**un rapport entre la première longueur (107) et la troisième longueur (113) est compris entre 1,0 et 3,0.

7. Le composite en forme de feuille (100) pouvant être obtenu par le procédé (700) selon la revendication 5 ou 6.

8. Un précurseur de récipient (200) comprenant le composite en forme de feuille (100) selon l'une quelconque des revendications 1 à 4 ou 7.

9. Un récipient fermé (500) comprenant le composite en forme feuille (100) selon l'une quelconque des revendications 1 à 4 ou 7.

10. Un procédé (800) comprenant, en tant qu'étapes de procédé :
a. fourniture du composite en forme de feuille (100) selon l'une quelconque des revendications 1 à 4 ou 7, le composite en forme de feuille (100) comprenant un premier bord longitudinal (115) et un autre bord longitudinal (116) ;
b. pliage du composite en forme de feuille (100) le long des lignes de rainure (102) de la multitude de lignes de rainure (102) ; et
c. mise en contact et jonction du premier bord longitudinal (115) à l'autre bord longitudinal (116) de manière à obtenir une jonction longitudinale (301).

11. Un précurseur de récipient (200) pouvant être obtenu par le procédé (800) selon la revendication 10.

12. Un procédé (900) comprenant, en tant qu'étapes de procédé :
A) fourniture du précurseur de récipient (200) selon la revendication 8 ou 11 ;
B) formation d'une région de base (504) du précurseur de récipient (200) en pliant le composite en forme de feuille (100) le long des lignes de rainure (102) de la multitude de lignes de rainure (102) ;
C) fermeture de la région de base (504) ;
D) remplissage du précurseur de récipient (200) avec un produit alimentaire ou une boisson ; et
E) fermeture du précurseur de récipient (200) dans une zone supérieure (503) de manière à obtenir un récipient fermé (500).

13. Un récipient fermé (500) pouvant être obtenu par le procédé (900) selon la revendication 12.

14. Une utilisation du composite en forme de feuille (100) selon l'une quelconque des revendications 1 à 4 ou 7 ou du précurseur de récipient (200) selon la revendication 8 ou 11 pour la production d'un récipient de produit alimentaire ou de boisson.
